(19) Europäisches Patentamt / European Patent Office / Office européen des brevets

(11) **EP 4 262 102 A1**

(12) **EUROPEAN PATENT APPLICATION**
published in accordance with Art. 153(4) EPC

(43) Date of publication:
**18.10.2023 Bulletin 2023/42**

(21) Application number: **22739622.3**

(22) Date of filing: **11.01.2022**

(51) International Patent Classification (IPC):
**H04B 7/06** (2006.01)    **H04B 7/08** (2006.01)
**H04W 72/12** (2023.01)    **H04L 5/00** (2006.01)
**H04W 72/04** (2023.01)

(52) Cooperative Patent Classification (CPC):
**H04B 7/06; H04B 7/08; H04L 5/00; H04W 72/04;
H04W 72/12**

(86) International application number:
**PCT/KR2022/000463**

(87) International publication number:
**WO 2022/154427 (21.07.2022 Gazette 2022/29)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.01.2021 KR 20210004204
18.01.2021 KR 20210006998**

(71) Applicant: **LG Electronics Inc.**
**Yeongdeungpo-gu**
**Seoul 07336 (KR)**

(72) Inventors:
• **GO, Seongwon**
**Seoul 06772 (KR)**
• **KIM, Kyuseok**
**Seoul 06772 (KR)**
• **KANG, Jiwon**
**Seoul 06772 (KR)**
• **KIM, Seonwook**
**Seoul 06772 (KR)**
• **CHUNG, Jaehoon**
**Seoul 06772 (KR)**

(74) Representative: **Frenkel, Matthias Alexander**
**Wuesthoff & Wuesthoff**
**Patentanwälte PartG mbB**
**Schweigerstraße 2**
**81541 München (DE)**

(54) **METHOD FOR TRANSMITTING AND RECEIVING DOWNLINK CONTROL INFORMATION IN WIRELESS COMMUNICATION SYSTEM, AND APPARATUS THEREFOR**

(57) A method of a user equipment (UE) for receiving downlink control information (DCI) in a wireless communication system comprises receiving configuration information related to a plurality of transmission configuration indication (TCI) states, receiving downlink control information (DCI) related to one or more TCI states of the plurality of TCI states, and determining a specific TCI state among the one or more TCI states based on the DCI. The DCI includes one or more fields related to a pre-configured UE group. Based on the one or more fields, information related to one or more targets to which the specific TCI state is applied is determined.

**FIG. 10**

EP 4 262 102 A1

**Description**

<u>**TECHNICAL FIELD**</u>

The present disclosure relates to a method of transmitting and receiving downlink control information (DCI) in a wireless communication system, and a device therefor.

<u>**BACKGROUND**</u>

Mobile communication systems have been developed to guarantee user activity while providing voice services. Mobile communication systems are expanding their services from voice only to data. Current soaring data traffic is depleting resources and users' demand for higher-data rate services is leading to the need for more advanced mobile communication systems.

Next-generation mobile communication systems are required to meet, e.g., handling of explosively increasing data traffic, significant increase in per-user transmission rate, working with a great number of connecting devices, and support for very low end-to-end latency and high-energy efficiency. To that end, various research efforts are underway for various technologies, such as dual connectivity, massive multiple input multiple output (MIMO), in-band full duplex, non-orthogonal multiple access (NOMA), super wideband support, and device networking.

According to the Rel-17 NR multi-beam enhancement related discussion, a joint DL/UL TCI state and a separate DL/UL TCI state have been newly introduced. A joint TCI and a separate TCI are indicated via UE-specific DCI.

Based on the joint TCI and/or the separate TCI, an operation of performing an indication of a common beam or separate beam for a UE group may be considered.

<u>**SUMMARY**</u>

When an indication of a common beam or separate beam for a UE group is performed based on the joint TCI state and/or the separate TCI state, UE-specific DCI is used when following an existing method, and signaling overhead may excessively increase.

An object of the present disclosure is to propose a method of constructing a payload of DCI considering the above-described problem. Specifically, an object of the present disclosure is to propose DCI including field/construction/payload for indicating information related to a beam based on the joint TCI state and/or the separate TCI state and UE/BS operation (e.g., ACK/NACK transmission) related to the DCI.

In order for UEs within the UE group to perform an update operation on the common beam/separate beam via the DCI, there is a need to indicate not only a reference RS according to a TCI state but also information related thereto.

Another object of the present disclosure is to propose a method of constructing a payload of the DCI so that not only beam indication information (e.g., reference RS) but also additional information related to beam indication/update operation are included.

Due to mobility of the UE, there may be UE(s) with different communication environments even within one UE group.

Another object of the present disclosure is to propose a method of performing a more detailed beam indication for UEs within a UE group via the DCI.

After the beam indication/update operation is performed via the DCI, signaling for transmitting and receiving a signal to which a pre-indicated (pre-updated) beam is applied may be additionally performed.

Another object of the present disclosure is to propose a method of reducing signaling overhead for transmission and reception of a signal to which a beam indicated via the DCI is applied.

A DCI format related to data scheduling may be utilized via the DCI. When only the beam indication/update operation is performed without the data scheduling via the DCI, fields related to the data scheduling are not used in the DCI format.

Another object of the present disclosure is to propose a method of performing a beam indication/update using unused fields among fields of the DCI.

The technical objects to be achieved by the present disclosure are not limited to those that have been described hereinabove merely by way of example, and other technical objects that are not mentioned can be clearly understood by those skilled in the art, to which the present disclosure pertains, from the following descriptions.

In one aspect of the present disclosure, there is provided a method of a user equipment (UE) for receiving downlink control information (DCI) in a wireless communication system comprising receiving configuration information related to a plurality of transmission configuration indication (TCI) states, receiving downlink control information (DCI) related to one or more TCI states of the plurality of TCI states, and determining a specific TCI state among the one or more TCI states based on the DCI.

The DCI includes one or more fields related to a pre-configured UE group. Based on the one or more fields, information related to one or more targets to which the specific TCI state is applied is determined.

The one or more targets may be based on a combination of at least one of i) a physical downlink control channel (PDCCH), ii) a physical downlink shared channel (PDSCH), iii) a downlink reference signal (DL RS), iv) a physical uplink control channel (PUCCH), v) a physical uplink shared channel (PUSCH), or vi) an uplink reference signal (UL RS.

Based on the one or more fields, whether at least one of a semi-persistent PDSCH or a semi-persistent PUSCH is included in the one or more targets may be determined.

The one or more fields may be based on one or more specific blocks, and each of the one or more specific blocks may include information for each UE within the pre-configured UE group.

The information for each UE within the pre-configured UE group may include at least one of i) information representing the specific TCI state or ii) information representing a combination related to the one or more targets.

The information representing the combination related to the one or more targets may be based on a codepoint of a specific bit field. A specific combination may be mapped to the codepoint.

The specific combination may include one or more signals determined based on at least one of a type of a physical channel, to which the specific TCI state is applied, or a control resource set (CORESET) related to the DCI.

The type of the physical channel may be based on a physical control channel or a physical shared channel.

The specific combination may include a physical downlink control channel (PDCCH) related to a specific CORESET within a bandwidth part (BWP) in which the CORESET related to the DCI is configured.

The specific CORESET may be based on a CORESET configured with the same CORESET pool index as a CORESET pool index of the CORESET related to the DCI among CORESETs within the BWP.

The information representing the specific TCI state may be based on a TCI state field to which the one or more TCI states are mapped.

The one or more TCI states may be based on i) one or more TCI states activated to UE-specific DCI or ii) one or more TCI states configured to one or more CORESETs within a bandwidth part (BWP) in which a control resource set (CORESET) related to the DCI is configured.

A location of a specific block related to the UE among the one or more specific blocks within a payload of the DCI may be determined based on pre-configured location information.

The one or more fields may be based on one TCI state field, and a pre-configured TCI state combination may be mapped to a codepoint of the one TCI state field.

One or more specific radio network temporary identifiers (RNTIs) related to the DCI may be configured, and a blind detection for a reception of the DCI may be performed based on one of the one or more specific RNTIs.

The method may further comprise transmitting HARQ-ACK information related to the DCI. Information related to a transmission of the HARQ-ACK information may be i) pre-configured via an RRC signaling or ii) determined based on the one or more fields.

The one or more fields may be based on one or more specific blocks, and each of the one or more specific blocks includes information for each UE within the pre-configured UE group. Each of the one or more specific blocks may include at least one of i) a HARQ process ID field, ii) a new date indicator (NDI) field, iii) a PUCCH resource indicator (PRI) field, or iv) a field (K2 field) representing an offset for the transmission of the HARQ-ACK information.

The DCI may include information related to a triggering of at least one of the one or more targets.

Based on 1) the DCI being DL grant DCI or UL grant DCI, and 2) all bits of a frequency domain resource assignment (FDRA) field within the DCI being configured to a specific value, one or more fields of fields related to a data scheduling of the DCI may be configured to be associated with one or more specific fields.

The one or more specific fields may include at least one of i) a field representing the specific TCI state, ii) a field representing a combination related to the one or more targets, or iii) a field related to a triggering of at least one of the one or more targets.

In another aspect of the present disclosure, there is provided a user equipment (UE) receiving downlink control information (DCI) in a wireless communication system comprising one or more transceivers, one or more processors, and one or more memories operably connectable to the one or more processors.

The one or more memories are configured to store instructions that allow the one or more processors to perform operations based on being executed by the one or more processors.

The operations comprise receiving configuration information related to a plurality of transmission configuration indication (TCI) states, receiving downlink control information (DCI) related to one or more TCI states of the plurality of TCI states, and determining a specific TCI state among the one or more TCI states based on the DCI.

The DCI includes one or more fields related to a pre-configured UE group. Based on the one or more fields, information related to one or more targets to which the specific TCI state is applied is determined.

In another aspect of the present disclosure, there is provided a method of a base station for transmitting downlink control information (DCI) in a wireless communication system comprising transmitting configuration information related to a plurality of transmission configuration indication (TCI) states, and transmitting downlink control information (DCI) related to one or more TCI states of the plurality of TCI states.

Based on the DCI, a specific TCI state among the one or more TCI states is determined,

The DCI includes one or more fields related to a pre-configured user equipment (UE) group. Based on the one or more fields, information related to one or more targets to which the specific TCI state is applied is determined.

In another aspect of the present disclosure, there is provided a base station transmitting downlink control information (DCI) in a wireless communication system comprising one or more transceivers, one or more processors, and one or more memories operably connectable to the one or more processors.

The one or more memories are configured to store instructions that allow the one or more processors to perform operations based on being executed by the one or more processors.

The operations comprise transmitting configuration information related to a plurality of transmission configuration indication (TCI) states, and transmitting downlink control information (DCI) related to one or more TCI states of the plurality of TCI states.

Based on the DCI, a specific TCI state among the one or more TCI states is determined.

The DCI includes one or more fields related to a pre-configured user equipment (UE) group. Based on the one or more fields, information related to one or more targets to which the specific TCI state is applied is determined.

In another aspect of the present disclosure, there is provided a device comprising one or more memories, and one or more processors functionally connected to the one or more memories.

The one or more memories are configured to store instructions that allow the one or more processors to perform operations based on being executed by the one or more processors.

The operations comprise receiving configuration information related to a plurality of transmission configuration indication (TCI) states, receiving downlink control information (DCI) related to one or more TCI states of the plurality of TCI states, and determining a specific TCI state among the one or more TCI states based on the DCI.

The DCI includes one or more fields related to a pre-configured user equipment (UE) group. Based on the one or more fields, information related to one or more targets to which the specific TCI state is applied is determined.

In another aspect of the present disclosure, there are provided one or more non-transitory computer readable mediums storing one or more instructions. The one or more instructions are configured to allow one or more processors to perform operations based on being executed by the one or more processors.

The operations comprise receiving configuration information related to a plurality of transmission configuration indication (TCI) states, receiving downlink control information (DCI) related to one or more TCI states of the plurality of TCI states, and determining a specific TCI state among the one or more TCI states based on the DCI.

The DCI includes one or more fields related to a pre-configured user equipment (UE) group. Based on the one or more fields, information related to one or more targets to which the specific TCI state is applied is determined.

According to aspects of the present disclosure, DCI including one or more fields related to a pre-configured group is transmitted. Based on the one or more fields, information related to one or more targets to which a specific TCI state is applied is determined. Thus, signaling overhead required for a beam indication (reference RS and target RS) to each of a plurality of UEs can be reduced.

According to aspects of the present disclosure, based on one or more fields included in DCI, information related to one or more targets to which a specific TCI state is applied is determined. Thus, compared to when a target RS for a reference RS indicated through a joint/separate TCI state is pre-configured via RRC signaling, a target RS more suitable for each UE situation can be dynamically indicated.

According to aspects of the present disclosure, blind detection related to reception of the DCI can be performed based on one of one or more specific RNTIs pre-configured to each UE within a group. Thus, beam indication/update can be performed more efficiently by grouping UEs having a similar communication environment even in the group into a sub-group.

According to aspects of the present disclosure, transmission of a specific target RS (e.g., SRS) can be together triggered via the DCI. Thus, not only signaling overhead required for joint/separate beam update for a UE group but also signaling overhead for triggering of a specific RS can be reduced.

According to aspects of the present disclosure, if the DCI is DL/UL grant DCI and a pre-configured condition is satisfied, at least one of fields related to date scheduling may be configured to be associated with one or more specific fields related to a beam update operation/target signal trigger operation. Fields not used in a specific occasion (e.g., when there is no data scheduling) can be used for beam indication/update and a subsequent operation (trigger of signal transmission based on the updated beam). Thus, signaling overhead required for the beam indication/update and the subsequent operation can be reduced.

Effects that could be achieved with the present disclosure are not limited to those that have been described hereinabove merely by way of example, and other effects and advantages of the present disclosure will be more clearly understood from the following description by a person skilled in the art to which the present disclosure pertains.

**BRIEF DESCRIPTION OF THE DRAWINGS**

The accompanying drawings, which are included to provide a further understanding of the present disclosure and constitute a part of the detailed description, illustrate embodiments of the present disclosure and together with the description serve to explain the principle of the present disclosure.

FIG. 1 is a diagram illustrating an example of an overall system structure of NR to which a method proposed in the present disclosure is applicable.

FIG. 2 illustrates a relationship between an uplink frame and a downlink frame in a wireless communication system to which a method proposed by the present disclosure is applicable.

FIG. 3 illustrates an example of a frame structure in an NR system.

FIG. 4 illustrates an example of a resource grid supported by a wireless communication system to which a method proposed in the present disclosure is applicable.

FIG. 5 illustrates examples of a resource grid for each antenna port and numerology to which a method proposed in the present disclosure is applicable.

FIG. 6 illustrates physical channels and general signal transmission used in a 3GPP system.

FIG. 7 illustrates an example of beamforming using SSB and CSI-RS.

FIG. 8 illustrates an example of a UL BM procedure using an SRS.

FIG. 9 is a flowchart showing an example of a UL BM procedure using the SRS.

FIG. 10 is a flowchart illustrating a method for a UE to receive downlink control information in a wireless communication system according to an embodiment of the present disclosure.

FIG. 11 is a flowchart illustrating a method for a base station to transmit downlink control information in a wireless communication system according to another embodiment of the present disclosure.

FIG. 12 illustrates a communication system 1 applied to the present disclosure.

FIG. 13 illustrates wireless devices applicable to the present disclosure.

FIG. 14 illustrates a signal process circuit for a transmission signal.

FIG. 15 illustrates another example of a wireless device applied to the present disclosure.

FIG. 16 illustrates a hand-held device applied to the present disclosure.

**DETAILED DESCRIPTION**

Hereinafter, preferred embodiments of the disclosure are described in detail with reference to the accompanying drawings. The following detailed description taken in conjunction with the accompanying drawings is intended for describing example embodiments of the disclosure, but not for representing a sole embodiment of the disclosure. The detailed description below includes specific details to convey a thorough understanding of the disclosure. However, it will be easily appreciated by one of ordinary skill in the art that embodiments of the disclosure may be practiced even without such details.

In some cases, to avoid ambiguity in concept, known structures or devices may be omitted or be shown in block diagrams while focusing on core features of each structure and device.

Hereinafter, downlink (DL) means communication from a base station to a terminal and uplink (UL) means communication from the terminal to the base station. In the downlink, a transmitter may be part of the base station, and a receiver may be part of the terminal. In the uplink, the transmitter may be part of the terminal and the receiver may be part of the base station. The base station may be expressed as a first communication device and the terminal may be expressed as a second communication device. A base station (BS) may be replaced with terms including a fixed station, a Node B, an evolved-NodeB (eNB), a Next Generation NodeB (gNB), a base transceiver system (BTS), an access point (AP), a network (5G network), an AI system, a road side unit (RSU), a vehicle, a robot, an Unmanned Aerial Vehicle (UAV), an Augmented Reality (AR) device, a Virtual Reality (VR) device, and the like. Further, the terminal may be fixed or mobile and may be replaced with terms including a User Equipment (UE), a Mobile Station (MS), a user terminal (UT), a Mobile Subscriber Station (MSS), a Subscriber Station (SS), an Advanced Mobile Station (AMS), a Wireless Terminal (WT), a Machine-Type Communication (MTC) device, a Machine-to-Machine (M2M) device, and a Device-to-Device (D2D) device, the vehicle, the robot, an AI module, the Unmanned Aerial Vehicle (UAV), the Augmented Reality (AR) device, the Virtual Reality (VR) device, and the like.

The following technology may be used in various wireless access systems, such as code division multiple access (CDMA), frequency division multiple access (FDMA), time division multiple access (TDMA), orthogonal frequency division multiple access (OFDMA), single carrier-FDMA (SC-FDMA), non-orthogonal multiple access (NOMA), and the like. The CDMA may be implemented by radio technology such as universal terrestrial radio access (UTRA) or CDMA2000. The TDMA may be implemented by radio technology such as global system for mobile communications (GSM)/general packet radio service (GPRS)/enhanced data rates for GSM evolution (EDGE). The OFDMA may be implemented as radio technology such as IEEE 802.11(Wi-Fi), IEEE 802.16 (WiMAX), IEEE 802-20, E-UTRA (evolved UTRA), and the like. The UTRA is a part of a universal mobile telecommunication system (UMTS). 3rd generation partnership project (3GPP) long term evolution (LTE), as a part of an evolved UMTS (E-UMTS) using E-UTRA, adopts the OFDMA in the downlink and the SC-FDMA in the uplink. LTE-A (advanced) is the evolution of 3GPP LTE.

For clarity of description, the present disclosure is described based on the 3GPP communication system (e.g., LTE-A or NR), but the technical spirit of the present disclosure are not limited thereto. LTE means technology after 3GPP TS 36.xxx Release 8. In detail, LTE technology after 3GPP TS 36.xxx Release 10 is referred to as the LTE-A and LTE technology after 3GPP TS 36.xxx Release 13 is referred to as the LTE-A pro. The 3GPP NR means technology after TS 38.xxx Release 15. The LTE/NR may be referred to as a 3GPP system. "xxx" means a standard document detail number. The LTE/NR may be collectively referred to as the 3GPP system. Matters disclosed in a standard document published before the present disclosure may refer to a background art, terms, abbreviations, etc., used for describing the present disclosure. For example, the following documents may be referenced.

3GPP LTE

    36.211: Physical channels and modulation
    36.212: Multiplexing and channel coding
    36.213: Physical layer procedures
    36.300: Overall description
    36.331: Radio Resource Control (RRC)

3GPP NR

    38.211: Physical channels and modulation
    38.212: Multiplexing and channel coding
    38.213: Physical layer procedures for control
    38.214: Physical layer procedures for data
    38.300: NR and NG-RAN Overall Description
    38.331: Radio Resource Control (RRC) protocol specification

As more and more communication devices require larger communication capacity, there is a need for improved mobile broadband communication compared to the existing radio access technology (RAT). Further, massive machine type communications (MTCs), which provide various services anytime and anywhere by connecting many devices and objects, are one of the major issues to be considered in the next generation communication. In addition, a communication system design considering a service/LTE sensitive to reliability and latency is being discussed. As such, the introduction of next-generation radio access technology considering enhanced mobile broadband communication (eMBB), massive MTC (mMTC), ultra-reliable and low latency communication (URLLC) is discussed, and in the present disclosure, the technology is called NR for convenience. The NR is an expression representing an example of 5G radio access technology (RAT).

In a New RAT system including NR uses an OFDM transmission scheme or a similar transmission scheme thereto. The new RAT system may follow OFDM parameters different from OFDM parameters of LTE. Alternatively, the new RAT system may follow numerology of conventional LTE/LTE-A as it is or have a larger system bandwidth (e.g., 100 MHz). Alternatively, one cell may support a plurality of numerologies. In other words, UEs that operate with different numerologies may coexist in one cell.

The numerology corresponds to one subcarrier spacing in a frequency domain. By scaling a reference subcarrier spacing by an integer N, different numerologies can be defined.

**Definition of terms**

    eLTE eNB: The eLTE eNB is the evolution of eNB that supports connectivity to EPC and NGC.
    gNB: A node which supports the NR as well as connectivity to NGC.
    New RAN: A radio access network which supports either NR or E-UTRA or interfaces with the NGC.

Network slice: A network slice is a network defined by the operator customized to provide an optimized solution for a specific market scenario which demands specific requirements with end-to-end scope.

Network function: A network function is a logical node within a network infrastructure that has well-defined external interfaces and well-defined functional behavior.

NG-C: A control plane interface used at an NG2 reference point between new RAN and NGC.

NG-U: A user plane interface used at an NG3 reference point between new RAN and NGC.

Non-standalone NR: A deployment configuration where the gNB requires an LTE eNB as an anchor for control plane connectivity to EPC, or requires an eLTE eNB as an anchor for control plane connectivity to NGC.

Non-standalone E-UTRA: A deployment configuration where the eLTE eNB requires a gNB as an anchor for control plane connectivity to NGC.

User plane gateway: An end point of NG-U interface.

## Overview of system

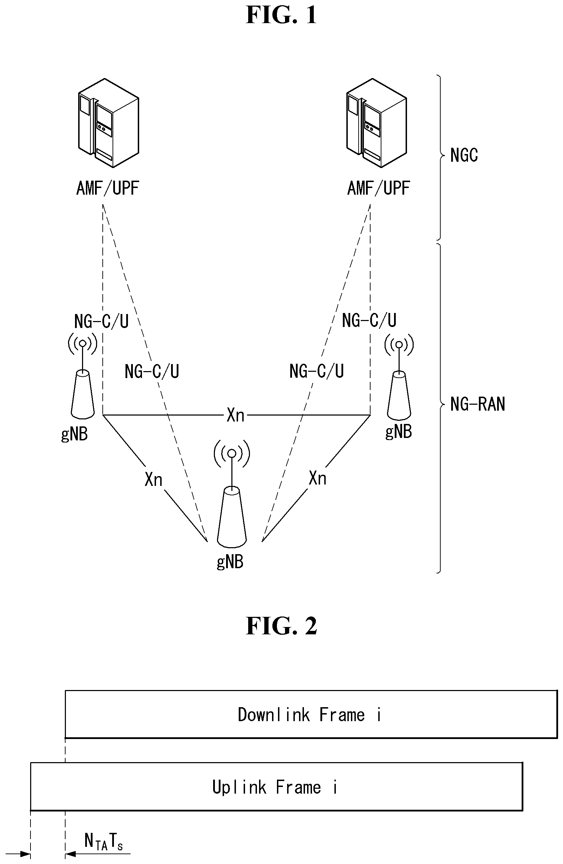

FIG. 1 illustrates an example overall NR system structure to which a method as proposed in the disclosure may apply.

Referring to FIG. 1, an NG-RAN is constituted of gNBs to provide a control plane (RRC) protocol end for user equipment (UE) and NG-RA user plane (new AS sublayer/PDCP/RLC/MAC/PHY).

The gNBs are mutually connected via an Xn interface.

The gNBs are connected to the NGC via the NG interface.

More specifically, the gNB connects to the access and mobility management function (AMF) via the N2 interface and connects to the user plane function (UPF) via the N3 interface.

## New RAT (NR) numerology and frame structure

In the NR system, a number of numerologies may be supported. Here, the numerology may be defined by the subcarrier spacing and cyclic prefix (CP) overhead. At this time, multiple subcarrier spacings may be derived by scaling the basic subcarrier spacing by integer N (or, $\mu$). Further, although it is assumed that a very low subcarrier spacing is not used at a very high carrier frequency, the numerology used may be selected independently from the frequency band.

Further, in the NR system, various frame structures according to multiple numerologies may be supported.

Hereinafter, an orthogonal frequency division multiplexing (OFDM) numerology and frame structure that may be considered in the NR system is described.

The multiple OFDM numerologies supported in the NR system may be defined as shown in Table 1.

[Table 1]

| $\mu$ | $\Delta f = 2^{\mu} \cdot 15$[kHz] | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

NR supports multiple numerologies (or subcarrier spacings (SCS)) for supporting various 5G services. For example, if SCS is 15 kHz, NR supports a wide area in typical cellular bands. If SCS is 30 kHz/60 kHz, NR supports a dense urban, lower latency and a wider carrier bandwidth. If SCS is 60 kHz or higher, NR supports a bandwidth greater than 24.25 GHz in order to overcome phase noise.

An NR frequency band is defined as a frequency range of two types FR1 and FR2. The FR1 and the FR2 may be configured as in Table 1 below. Furthermore, the FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

With regard to the frame structure in the NR system, the size of various fields in the time domain is expressed as a multiple of time unit of $T_s = 1/(\Delta f_{max} \cdot N_f)$, where $\Delta f_{max} = 480 \cdot 10$, and $N_f = 4096$. Downlink and uplink transmissions is constituted of a radio frame with a period of $T_f = (\Delta f_{max} N_f/100) \cdot T_s = 10ms$. Here, the radio frame is constituted of 10 subframes each of which has a period of $T_{sf} = (\Delta f_{max} N_f/1000) \cdot T_s = 1ms$. In this case, one set of frames for uplink and one set of frames for downlink may exist.

FIG. 2 illustrates a relationship between an uplink frame and downlink frame in a wireless communication system to which a method described in the present disclosure is applicable.

As illustrated in FIG. 2, uplink frame number i for transmission from the user equipment (UE) should begin

$$T_{\mathrm{TA}} = N_{\mathrm{TA}} T_s$$ earlier than the start of the downlink frame by the UE.

For numerology $\mu$, slots are numbered in ascending order of $n_s^\mu \in \left\{ 0, ..., N_{\mathrm{subframe}}^{\mathrm{slots}, \mu} - 1 \right\}$ in the subframe and in ascending order of $n_{s,f}^\mu \in \left\{ 0, ..., N_{\mathrm{frame}}^{\mathrm{slots}, \mu} - 1 \right\}$ in the radio frame. One slot includes consecutive OFDM symbols of

$N_{\mathrm{symb}}^\mu$, and $N_{\mathrm{symb}}^\mu$ is determined according to the used numerology and slot configuration. In the subframe, the start of slot $n_s^\mu$ is temporally aligned with the start of $n_s^\mu N_{\mathrm{symb}}^\mu$.

Not all UEs are able to transmit and receive at the same time, and this means that not all OFDM symbols in a downlink slot or an uplink slot are available to be used.

Table 3 represents the number $N_{\mathrm{symb}}^{\mathrm{slot}}$ of OFDM symbols per slot, the number $N_{\mathrm{slot}}^{\mathrm{frame}, \mu}$ of slots per radio frame, and the number $N_{\mathrm{slot}}^{\mathrm{subframe}, \mu}$ of slots per subframe in a normal CP. Table 4 represents the number of OFDM symbols per slot, the number of slots per radio frame, and the number of slots per subframe in an extended CP.

[Table 3]

| $\mu$ | $N_{\mathrm{symb}}^{\mathrm{slot}}$ | $N_{\mathrm{slot}}^{\mathrm{frame},\mu}$ | $N_{\mathrm{slot}}^{\mathrm{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{\mathrm{symb}}^{\mathrm{slot}}$ | $N_{\mathrm{slot}}^{\mathrm{frame},\mu}$ | $N_{\mathrm{slot}}^{\mathrm{subframe},\mu}$ |
|---|---|---|---|
| 2 | 12 | 40 | 4 |

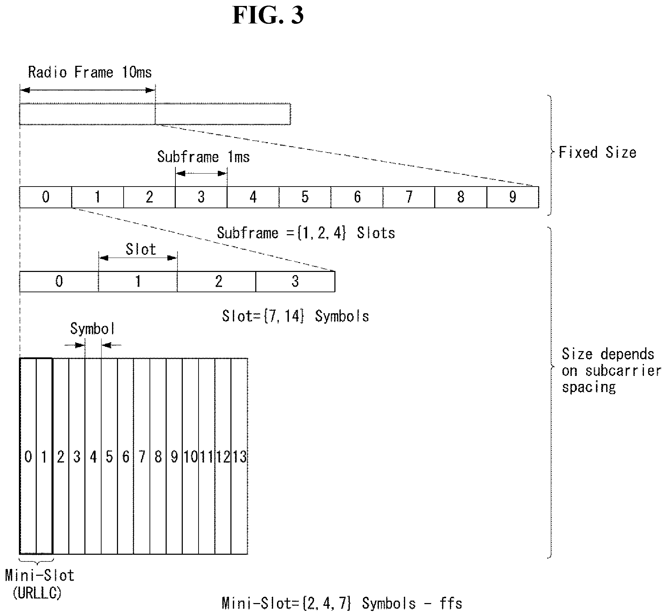

FIG. 3 illustrates an example of a frame structure in a NR system. FIG. 3 is merely for convenience of explanation and does not limit the scope of the present disclosure.

In Table 4, in case of $\mu=2$, i.e., as an example in which a subcarrier spacing (SCS) is 60 kHz, one subframe (or frame) may include four slots with reference to Table 3, and one subframe = {1, 2, 4} slots shown in FIG. 3, for example, the number of slot(s) that may be included in one subframe may be defined as in Table 3.

Further, a mini-slot may consist of 2, 4, or 7 symbols, or may consist of more symbols or less symbols.

In regard to physical resources in the NR system, an antenna port, a resource grid, a resource element, a resource block, a carrier part, etc. may be considered.

Hereinafter, the above physical resources that can be considered in the NR system are described in more detail.

First, in regard to an antenna port, the antenna port is defined so that a channel over which a symbol on an antenna port is conveyed can be inferred from a channel over which another symbol on the same antenna port is conveyed. When large-scale properties of a channel over which a symbol on one antenna port is conveyed can be inferred from a channel over which a symbol on another antenna port is conveyed, the two antenna ports may be regarded as being in a quasi co-located or quasi co-location (QC/QCL) relation. Here, the large-scale properties may include at least one of delay spread, Doppler spread, frequency shift, average received power, and received timing.

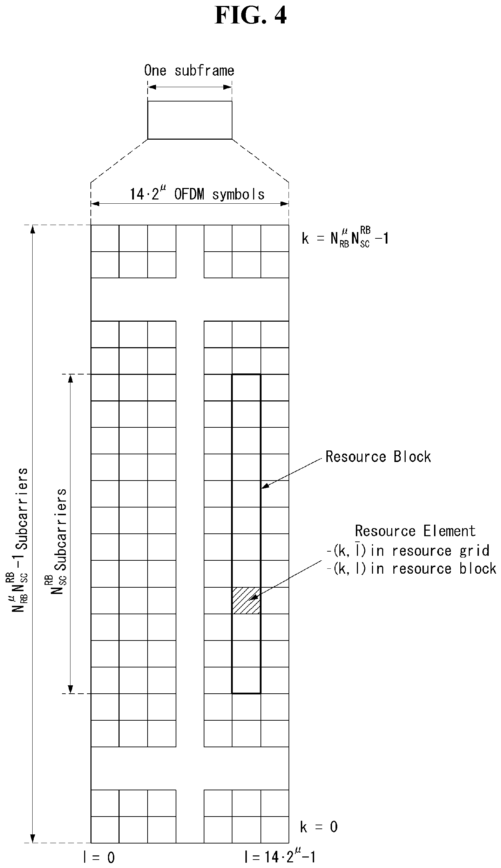

FIG. 4 illustrates an example of a resource grid supported in a wireless communication system to which a method proposed in the present disclosure is applicable.

Referring to FIG. 4, a resource grid consists of $N_{\text{RB}}^{\mu} N_{\text{sc}}^{\text{RB}}$ subcarriers on a frequency domain, each subframe consisting of $14 \cdot 2^{\mu}$ OFDM symbols, but the present disclosure is not limited thereto.

In the NR system, a transmitted signal is described by one or more resource grids, consisting of $N_{\text{RB}}^{\mu} N_{\text{sc}}^{\text{RB}}$ subcarriers, and $2^{\mu} N_{\text{symb}}^{(\mu)}$ OFDM symbols, where $N_{\text{RB}}^{\mu} \leq N_{\text{RB}}^{\max, \mu}$. $N_{\text{RB}}^{\max, \mu}$ denotes a maximum transmission bandwidth and may change not only between numerologies but also between uplink and downlink..

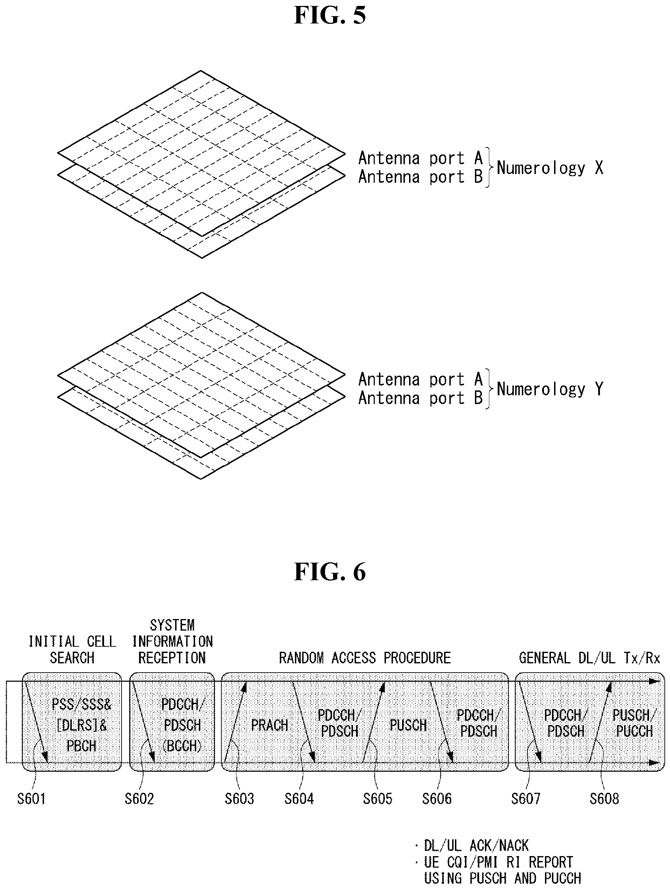

In this case, as illustrated in FIG. 5, one resource grid may be configured per numerology $\mu$ and antenna port p.

FIG. 5 illustrates examples of a resource grid per antenna port and numerology to which a method proposed in the present disclosure is applicable.

Each element of the resource grid for the numerology $\mu$ and the antenna port p is called a resource element and is uniquely identified by an index pair $(k, \overline{l})$, where $k = 0, ..., N_{\text{RB}}^{\mu} N_{\text{sc}}^{\text{RB}} - 1$ is an index on a frequency domain, and $\overline{l} = 0, ..., 2^{\mu} N_{\text{symb}}^{(\mu)} - 1$ refers to a location of a symbol in a subframe. The index pair $(k, \overline{l})$ is used to refer to a resource element in a slot, where $l = 0, ..., N_{\text{symb}}^{\mu} - 1$.

The resource element $(k, \overline{l})$ for the numerology $\mu$ and the antenna port p corresponds to a complex value $a_{k, \overline{l}}^{(p, \mu)}$. When there is no risk for confusion or when a specific antenna port or numerology is not specified, the indexes p and $\mu$ may be dropped, and as a result, the complex value may be $a_{k, \overline{l}}^{(p)}$ or $a_{k, \overline{l}}$.

Further, a physical resource block is defined as $N_{\text{sc}}^{\text{RB}} = 12$ consecutive subcarriers in the frequency domain.

Point A serves as a common reference point of a resource block grid and may be obtained as follows.

- offsetToPointA for PCell downlink represents a frequency offset between the point A and a lowest subcarrier of a lowest resource block that overlaps a SS/PBCH block used by the UE for initial cell selection, and is expressed in units of resource blocks assuming 15 kHz subcarrier spacing for FR1 and 60 kHz subcarrier spacing for FR2;
- absoluteFrequencyPointA represents frequency-location of the point A expressed as in absolute radio-frequency channel number (ARFCN).

The common resource blocks are numbered from 0 and upwards in the frequency domain for subcarrier spacing configuration $\mu$.

The center of subcarrier 0 of common resource block 0 for the subcarrier spacing configuration $\mu$ coincides with 'point A'. A common resource block number $n_{\text{CRB}}^{\mu}$ in the frequency domain and resource elements (k, l) for the subcarrier spacing configuration $\mu$ may be given by the following Equation 1.

【Equation 1】

$$n_{\text{CRB}}^{\mu} = \left\lfloor \frac{k}{N_{\text{sc}}^{\text{RB}}} \right\rfloor$$

Here, *k* may be defined relative to the point A so that *k* = 0 corresponds to a subcarrier centered around the point A. Physical resource blocks are defined within a bandwidth part (BWP) and are numbered from 0 to $N_{\mathrm{BWP},i}^{\mathrm{size}} - 1$, where *i* is No. of the BWP. A relation between the physical resource block $n_{\mathrm{PRB}}$ in BWP *i* and the common resource block $n_{\mathrm{CRB}}$ may be given by the following Equation 2.

【Equation 2】

$$n_{\mathrm{CRB}} = n_{\mathrm{PRB}} + N_{\mathrm{BWP},i}^{\mathrm{start}}$$

Here, $N_{\mathrm{BWP},i}^{\mathrm{start}}$ may be the common resource block where the BWP starts relative to the common resource block 0.

**Physical Channel and General Signal Transmission**

FIG. 5 illustrates physical channels and general signal transmission used in a 3GPP system. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

When the UE is powered on or newly enters a cell, the UE performs an initial cell search operation such as synchronizing with the eNB (S501). To this end, the UE may receive a Primary Synchronization Signal (PSS) and a (Secondary Synchronization Signal (SSS) from the eNB and synchronize with the eNB and acquire information such as a cell ID or the like. Thereafter, the UE may receive a Physical Broadcast Channel (PBCH) from the eNB and acquire in-cell broadcast information. Meanwhile, the UE receives a Downlink Reference Signal (DL RS) in an initial cell search step to check a downlink channel status.

A UE that completes the initial cell search receives a Physical Downlink Control Channel (PDCCH) and a Physical Downlink Control Channel (PDSCH) according to information loaded on the PDCCH to acquire more specific system information (S502).

Meanwhile, when there is no radio resource first accessing the eNB or for signal transmission, the UE may perform a Random Access Procedure (RACH) to the eNB (S503 to S506). To this end, the UE may transmit a specific sequence to a preamble through a Physical Random Access Channel (PRACH) (S503 and S505) and receive a response message (Random Access Response (RAR) message) for the preamble through the PDCCH and a corresponding PDSCH. In the case of a contention based RACH, a Contention Resolution Procedure may be additionally performed (S506).

The UE that performs the above procedure may then perform PDCCH/PDSCH reception (S507) and Physical Uplink Shared Channel (PUSCH)/Physical Uplink Control Channel (PUCCH) transmission (S508) as a general uplink/downlink signal transmission procedure. In particular, the UE may receive Downlink Control Information (DCI) through the PDCCH. Here, the DCI may include control information such as resource allocation information for the UE and formats may be differently applied according to a use purpose.

Meanwhile, the control information which the UE transmits to the eNB through the uplink or the UE receives from the eNB may include a downlink/uplink ACK/NACK signal, a Channel Quality Indicator (CQI), a Precoding Matrix Index (PMI), a Rank Indicator (RI), and the like. The UE may transmit the control information such as the CQI/PMI/RI, etc., through the PUSCH and/or PUCCH.

**Beam Management (BM)**

A BM procedure as layer 1 (L1)/layer 2 (L2) procedures for acquiring and maintaining a set of base station (e.g., gNB, TRP, etc.) and/or terminal (e.g., UE) beams which may be used for downlink (DL) and uplink (UL) transmission/reception may include the following procedures and terms.

- Beam measurement: Opeation of measuring characteristics of a beam forming signal received by the eNB or UE.
- Beam determination: Operation of selecting a transmit (Tx) beam/receive (Rx) beam of the eNB or UE by the eNB or UE.

- Beam sweeping: Operation of covering a spatial region using the transmit and/or receive beam for a time interval by a predetermined scheme.
- Beam report: Operation in which the UE reports information of a beamformed signal based on beam measurement.

The BM procedure may be divided into (1) a DL BM procedure using a synchronization signal (SS)/physical broadcast channel (PBCH) Block or CSI-RS and (2) a UL BM procedure using a sounding reference signal (SRS). Further, each BM procedure may include Tx beam sweeping for determining the Tx beam and Rx beam sweeping for determining the Rx beam.

Downlink Beam Management (DL BM)

The DL BM procedure may include (1) transmission of beamformed DL reference signals (RSs) (e.g., CIS-RS or SS Block (SSB)) of the eNB and (2) beam reporting of the UE.
Here, the beam reporting a preferred DL RS identifier (ID)(s) and L1-Reference Signal Received Power (RSRP).
The DL RS ID may be an SSB Resource Indicator (SSBRI) or a CSI-RS Resource Indicator (CRI).

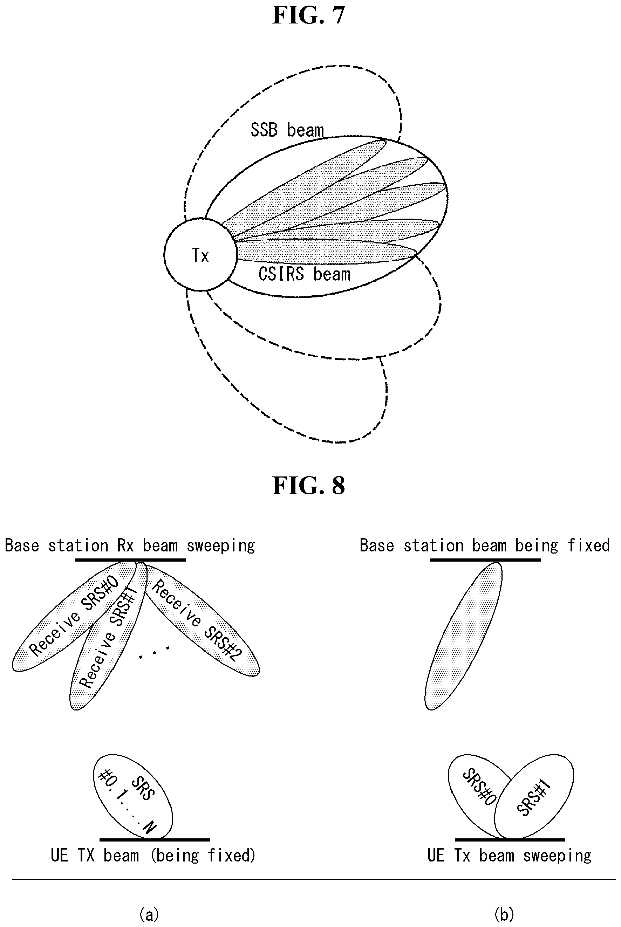

FIG. 7 illustrates an example of beamforming using a SSB and a CSI-RS.
As illustrated in FIG. 7, a SSB beam and a CSI-RS beam may be used for beam measurement. A measurement metric is L1-RSRP per resource/block. The SSB may be used for coarse beam measurement, and the CSI-RS may be used for fine beam measurement. The SSB may be used for both Tx beam sweeping and Rx beam sweeping. The Rx beam sweeping using the SSB may be performed while the UE changes Rx beam for the same SSBRI across multiple SSB bursts. One SS burst includes one or more SSBs, and one SS burst set includes one or more SSB bursts.

DL BM related beam indication

A UE may be RRC-configured with a list of up to M candidate transmission configuration indication (TCI) states at least for the purpose of quasi co-location (QCL) indication, where M may be 64.
Each TCI state may be configured with one RS set. Each ID of DL RS at least for the purpose of spatial QCL (QCL Type D) in an RS set may refer to one of DL RS types such as SSB, P-CSI RS, SP-CSI RS, A-CSI RS, etc.
Initialization/update of the ID of DL RS(s) in the RS set used at least for the purpose of spatial QCL may be performed at least via explicit signaling.
Table 5 represents an example of TCI-State IE.
The TCI-State IE associates one or two DL reference signals (RSs) with corresponding quasi co-location (QCL) types.

【Table 5】

```
-- ASN1START
-- TAG-TCI-STATE-START

TCI-State ::=                  SEQUENCE {
    tci-StateId                   TCI-StateId,
    qcl-Type1                  QCL-Info,
    qcl-Type2                  QCL-Info
    ...
}

QCL-Info ::=                  SEQUENCE {
    cell                          ServCellIndex
    bwp-Id                        BWP-Id
    referenceSignal               CHOICE {
        csi-rs                    NZP-CSI-RS-ResourceId,
        ssb                        SSB-Index
    },
    qcl-Type                  ENUMERATED {typeA, typeB, typeC, typeD},
    ...
}

-- TAG-TCI-STATE-STOP
-- ASN1STOP
```

In Table 5, bwp-Id parameter represents a DL BWP where the RS is located, cell parameter represents a carrier where the RS is located, and reference signal parameter represents reference antenna port(s) which is a source of quasi co-location for corresponding target antenna port(s) or a reference signal including the one. The target antenna port(s) may be CSI-RS, PDCCH DMRS, or PDSCH DMRS. As an example, in order to indicate QCL reference RS information on NZP CSI-RS, the corresponding TCI state ID may be indicated to NZP CSI-RS resource configuration information. As another example, in order to indicate QCL reference information on PDCCH DMRS antenna port(s), the TCI state ID may be indicated to each CORESET configuration. As another example, in order to indicate QCL reference information on PDSCH DMRS antenna port(s), the TCI state ID may be indicated via DCI.

**Quasi-Co Location (QCL)**

The antenna port is defined so that a channel over which a symbol on an antenna port is conveyed can be inferred from a channel over which another symbol on the same antenna port is conveyed. When properties of a channel over which a symbol on one antenna port is conveyed can be inferred from a channel over which a symbol on another antenna port is conveyed, the two antenna ports may be considered as being in a quasi co-located or quasi co-location (QC/QCL) relationship.

The channel properties include one or more of delay spread, Doppler spread, frequency/Doppler shift, average received power, received timing/average delay, and spatial RX parameter. The spatial Rx parameter means a spatial (reception) channel property parameter such as an angle of arrival.

The UE may be configured with a list of up to M TCI-State configurations within the higher layer parameter PDSCH-Config to decode PDSCH according to a detected PDCCH with DCI intended for the corresponding UE and a given serving cell, where M depends on UE capability.

Each TCI-State contains parameters for configuring a quasi co-location relationship between one or two DL reference signals and the DM-RS ports of the PDSCH.

The quasi co-location relationship is configured by the higher layer parameter qcl-Type 1 for the first DL RS and qcl-Type2 for the second DL RS (if configured). For the case of two DL RSs, the QCL types are not be the same, regardless of whether the references are to the same DL RS or different DL RSs.

The quasi co-location types corresponding to each DL RS are given by the higher layer parameter qcl-Type of QCL-Info and may take one of the following values:

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD' : {Spatial Rx parameter}

For example, if a target antenna port is a specific NZP CSI-RS, the corresponding NZP CSI-RS antenna ports may be indicated/configured to be QCLed with a specific TRS in terms of QCL-TypeA and with a specific SSB in terms of QCL-TypeD. The UE receiving the indication/configuration may receive the corresponding NZP CSI-RS using the Doppler or delay value measured in the QCL-TypeA TRS and apply the Rx beam used for QCL-TypeD SSB reception to the reception of the corresponding NZP CSI-RS reception.

The UE may receive an activation command by MAC CE signaling used to map up to eight TCI states to the codepoint of the DCI field 'Transmission Configuration Indication'.

UL BM procedure

A UL BM may be configured such that beam reciprocity (or beam correspondence) between Tx beam and Rx beam is established or not established depending on the UE implementation. If the beam reciprocity between Tx beam and Rx beam is established in both a base station and a UE, a UL beam pair may be adjusted via a DL beam pair. However, if the beam reciprocity between Tx beam and Rx beam is not established in any one of the base station and the UE, a process for determining the UL beam pair is necessary separately from determining the DL beam pair.

Even when both the base station and the UE maintain the beam correspondence, the base station may use a UL BM procedure for determining the DL Tx beam even if the UE does not request a report of a (preferred) beam.

The UM BM may be performed via beamformed UL SRS transmission, and whether to apply UL BM of a SRS resource set is configured by the (higher layer parameter) usage. If the usage is set to 'BeamManagement (BM)', only one SRS resource may be transmitted to each of a plurality of SRS resource sets in a given time instant.

The UE may be configured with one or more sounding reference symbol (SRS) resource sets configured by (higher layer parameter) SRS-ResourceSet (via higher layer signaling, RRC signaling, etc.). For each SRS resource set, the UE may be configured with $K \geq 1$ SRS resources (higher later parameter SRS-resource), where K is a natural number, and a maximum value of K is indicated by SRS_capability.

In the same manner as the DL BM, the UL BM procedure may be divided into a UE's Tx beam sweeping and a base station's Rx beam sweeping.

FIG. 8 illustrates an example of an UL BM procedure using a SRS.

More specifically, (a) of FIG. 8 illustrates an Rx beam determination procedure of a base station, and (a) of FIG. 8 illustrates a Tx beam sweeping procedure of a UE.

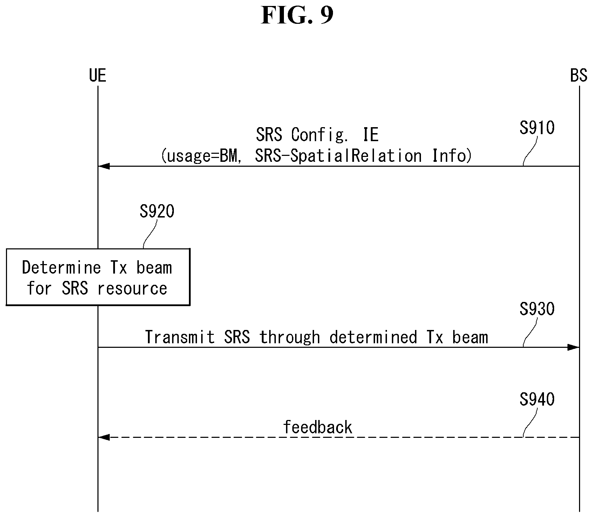

FIG. 9 is a flow chart illustrating an example of an UL BM procedure using a SRS.

- The UE receives, from the base station, RRC signaling (e.g., SRS-Config IE) including (higher layer parameter) usage parameter set to 'beam management' in S910.

Table 6 represents an example of SRS-Config information element (IE), and the SRS-Config IE is used for SRS transmission configuration. The SRS-Config IE contains a list of SRS-Resources and a list of SRS-Resource sets. Each SRS resource set means a set of SRS resources.

The network may trigger transmission of the SRS resource set using configured aperiodicSRS-ResourceTrigger (L1 DCI).

【Table 6】

```
-- ASN1START
-- TAG-MAC-CELL-GROUP-CONFIG-START

SRS-Config ::=                      SEQUENCE {
    srs-ResourceSetToReleaseList            SEQUENCE (SIZE(1..maxNrofSRS-
ResourceSets)) OF SRS-ResourceSetId         OPTIONAL,      -- Need N
    srs-ResourceSetToAddModList             SEQUENCE (SIZE(1..maxNrofSRS-
ResourceSets)) OF SRS-ResourceSet            OPTIONAL,      -- Need N

    srs-ResourceToReleaseList               SEQUENCE (SIZE(1..maxNrofSRS-
Resources)) OF SRS-ResourceId               OPTIONAL, -- Need N
    srs-ResourceToAddModList                SEQUENCE (SIZE(1..maxNrofSRS-
Resources)) OF SRS-Resource                 OPTIONAL,      -- Need N

    tpc-Accumulation                    ENUMERATED {disabled}
    ...
}
SRS-ResourceSet ::=                 SEQUENCE {
    srs-ResourceSetId                   SRS-ResourceSetId,
    srs-ResourceIdList                  SEQUENCE (SIZE(1..maxNrofSRS-
ResourcesPerSet)) OF SRS-ResourceId    OPTIONAL, -- Cond Setup

    resourceType                    CHOICE {
        aperiodic                       SEQUENCE {
            aperiodicSRS-ResourceTrigger        INTEGER (1..maxNrofSRS-
TriggerStates-1),
            csi-RS                              NZP-CSI-RS-ResourceId
            slotOffset                          INTEGER (1..32)
            ...
        },
        semi-persistent                 SEQUENCE {
            associatedCSI-RS                    NZP-CSI-RS-ResourceId
            ...
        },
        periodic                        SEQUENCE {
            associatedCSI-RS                    NZP-CSI-RS-ResourceId
            ...
        }
    },
    usage                           ENUMERATED {beamManagement,
codebook, nonCodebook, antennaSwitching},
    alpha                           Alpha
    p0                              INTEGER (-202..24)
    pathlossReferenceRS             CHOICE {
        ssb-Index                       SSB-Index,
        csi-RS-Index                    NZP-CSI-RS-ResourceId

SRS-SpatialRelationInfo ::=         SEQUENCE {
    servingCellId                       ServCellIndex
    referenceSignal                 CHOICE {
        ssb-Index                       SSB-Index,
        csi-RS-Index                    NZP-CSI-RS-ResourceId,
        srs                             SEQUENCE {
            resourceId                      SRS-ResourceId,
            uplinkBWP                       BWP-Id
        }
    }
}

SRS-ResourceId ::=                  INTEGER (0..maxNrofSRS-Resources-1)
```

In Table 6, usage refers to a higher layer parameter to indicate whether the SRS resource set is used for beam management or is used for codebook based or non-codebook based transmission. The usage parameter corresponds to L1 parameter 'SRS-SetUse'. 'spatialRelationInfo' is a parameter representing a configuration of spatial relation between a reference RS and a target SRS. The reference RS may be SSB, CSI-RS, or SRS which corresponds to L1 parameter 'SRS-SpatialRelationInfo'. The usage is configured per SRS resource set.

- The UE determines the Tx beam for the SRS resource to be transmitted based on SRS-SpatialRelation Info contained in the SRS-Config IE in S920. The SRS-SpatialRelation Info is configured per SRS resource and indicates whether to apply the same beam as the beam used for SSB, CSI-RS, or SRS per SRS resource. Further, SRS-SpatialRelationInfo may be configured or not configured in each SRS resource.

- If the SRS-SpatialRelationInfo is configured in the SRS resource, the same beam as the beam used for SSB, CSI-RS or SRS is applied for transmission. However, if the SRS-SpatialRelationInfo is not configured in the SRS resource, the UE randomly determines the Tx beam and transmits the SRS via the determined Tx beam in S930.

More specifically, for P-SRS with 'SRS-ResourceConfigType' set to 'periodic' :

i) if SRS-SpatialRelationInfo is set to 'SSB/PBCH,' the UE transmits the corresponding SRS resource with the same spatial domain transmission filter (or generated from the corresponding filter) as the spatial domain Rx filter used for the reception of the SSB/PBCH; or
ii) if SRS-SpatialRelationInfo is set to 'CSI-RS,' the UE transmits the SRS resource with the same spatial domain transmission filter used for the reception of the periodic CSI-RS or SP CSI-RS; or
iii) if SRS-SpatialRelationInfo is set to 'SRS,' the UE transmits the SRS resource with the same spatial domain transmission filter used for the transmission of the periodic SRS.

Even if 'SRS-ResourceConfigType' is set to 'SP-SRS' or 'AP-SRS,' the beam determination and transmission operations may be applied similar to the above.

- Additionally, the UE may receive or may not receive feedback for the SRS from the base station, as in the following three cases in S940.

i) If Spatial_Relation_Info is configured for all the SRS resources within the SRS resource set, the UE transmits the SRS with the beam indicated by the base station. For example, if the Spatial_Relation_Info indicates all the same SSB, CRI, or SRI, the UE repeatedly transmits the SRS with the same beam. This case corresponds to (a) of FIG. 8 as the usage for the base station to select the Rx beam.
ii) The Spatial_Relation_Info may not be configured for all the SRS resources within the SRS resource set. In this case, the UE may perform transmission while freely changing SRS beams. That is, this case corresponds to (b) of FIG. 8 as the usage for the UE to sweep the Tx beam.
iii) The Spatial_Relation_Info may be configured for only some SRS resources within the SRS resource set. In this case, the UE may transmit the configured SRS resources with the indicated beam, and transmit the SRS resources, for which Spatial_Relation_Info is not configured, by randomly applying the Tx beam.

PUCCH beam indication

When the base station indicates, to the UE, a beam for use in PUCCH transmission, spatial relation info may be indicated/configured like the SRS. Spatial relation info may be SSB, CSI-RS, or SRS like SRS and provides reference RS information from the viewpoint of a beam to be used for PUCCH transmission as a target. In the case of PUCCH, a beam may be (differently) configured/indicated in units of PUCCH resources, and two schemes are supported. The first scheme is a method for always applying the corresponding spatial relation RS if transmitting the corresponding PUCCH if one spatial relation info is configured with the RRC message (i.e., RRC only). The second scheme is a method for indicating a specific one to be applied to a target PUCCH resource among a plurality of spatial relation RS information configured as RRC with a MAC-CE message after configuring two or more spatial relation info with an RRC message (that is, RRC + MAC-CE).

PUSCH beam indication

When the base station indicates, to the UE, a beam to be used for PUSCH transmission, with DCI format 0_1, an SRS resource serving as a reference may be indicated. In NR PUSCH transmission, two schemes are supported: a codebook (CB) based transmission scheme and a non-codebook based transmission scheme. Similar to LTE UL MIMO, the CB based transmission scheme indicates precoder information to be applied to a plurality of UE antenna ports to DCI through TPMI and TRI. However, unlike LTE, beamformed SRS resource transmission may be supported, and up to two SRS resources may be configured for CB based transmission. Since each SRS resource may be configured with different spatial relation info, it may be transmitted while beamformed in different directions. The base station receiving this may designate one of the two beams to be used when applying the PUSCH as a 1-bit SRS resource ID (SRI) field of DCI. For example, if a 4 Tx UE is configured with two 4-port SRS resources and each SRS resource is configured with a different spatial relation RS, each SRS resource is beamformed according to each spatial relation RS and each is transmitted to 4 ports. The base station selects and indicates one of the two SRS resources as SRI while simultaneously indicating TPMI and TRI together, as MIMO precoding information to be applied to SRS ports, which have been used for SRS resource transmission, as UL DCI. In non-CB based transmission, the UE may be configured with up to 4 1-port SRS resources. The UE indicated with this beamforms each SRS resource according to the spatial relation info and transmits it to the base station. Upon receiving it, the base station indicates one or more SRI(s) to be applied for PUSCH transmission. Unlike the CB based scheme, in the non-CB scheme, each SRS resource is configured with only 1 port, so that TPMI is not indicated. Resultantly, the number of SRS resources indicated (i.e., the number of SRIs) becomes identical to the transmission rank, and thus, the TRI is not indicated. As a result, the same beamforming (precoding) as a specific PUSCH DMRS port (or layer) is applied to each indicated 1 port SRS resource. In non-CB UL transmission, a specific NZP CSI-RS resource may be associated with each SRS resource by RRC (associatedCSI-RS IE in 38.331) and, when so configured, the associated NZP CSI-RS is also triggered when the aperiodic SRS for non-CB is triggered with DCI. In this case, the UE receives the triggered NZP CSI-RS, calculates a beam coefficient (or precoder) to be applied to each SRS resource (using channel reciprocity), and then transmits the SRS resources (sequentially).

When the base station schedules the PUSCH in DCI format 0_0, the direct beam indication method through DCI is not supported because the SRI field in the CB based or non-CB based transmission does not exist in DCI format 0_0. In this case, the UE transmits the corresponding PUSCH using the same beam as the beam to be applied to transmission of the PUCCH resource having the lowest ID among the PUCCH resources configured in the active BWP of the corresponding cell (that is, the spatial relation info is the same).

The contents (3GPP system, frame structure, NR system, etc.) described above can be applied by being combined with methods to be described later in the present disclosure, or can be supplemented to clarify technical features of methods described in the present disclosure. Methods to be described below are distinguished merely for convenience of description. Therefore, it is obvious that partial configuration of any one method can be replaced by partial configuration of another method, or methods can be combined and applied.

According to Rel-17 standardization, a discussion is being carried out on an operation of updating common/separate beam for multiple UL channels/RSs through joint and/or separate DL/UL TCI state.

The common/separate beam update operation may be performed based on the following 1) and 2).

1) Indication of TCI state(s) via DCI. The TCI state(s) is TCI state(s) in which a specific reference RS (e.g., reference DL/UL RS) is configured with QCL type-D RS or/and spatial relation information.

2) Update to reception/transmission beam corresponding to a reference RS indicated for specific target DL/UL channel/RS

In this instance, the UE commonly performs reception/transmission beam update on a specific number of target UL channels/RSs. If a target channel/RS is the UL channel/RS, the base station is likely to indicate power control related parameters (open-loop and/or closed-loop power control parameters) together when indicating the TCI state via the DCI (the discussion of Rel-17 standardization refers to Table 7 below).

Table 7 below shows an agreement related to common/separate beam update/indication.

[Table 7]

| @RAN1 #102e |
| --- |
| **Agreement** |
| Note: the enumeration for issues (such as "issue 1a), 1b), 6) in the proposal below refers to the enumeration within the proposals, not Table 1 in the FL summary. |
| • [Issue 1] For Rel.17 NR FeMIMO, on the unified TCI framework |
| a) Support joint TCI for DL and UL based on and analogous to Rel.15/16 DL TCI framework |
| ▪ The term "TCI" at least comprises a TCI state that <u>includes</u> at least one source RS to provide a reference (UE assumption) for determining QCL and/or spatial filter |
| ▪ The source reference signal(s) in M TCIs provide common QCL information at least for UE-dedicated reception on PDSCH and all or subset of CORESETs in a CC |

(continued)

| @RAN1 #102e |
| --- |
| **Agreement** |

• FFS: Optionally this common QCL information can also apply to CSI-RS resource for CSI, CSI-RS resource for BM, and CSI-RS for tracking

• FFS: Applicability on PDSCH includes PDSCH default beam

• Working Assumption: Select between M=1 and M>=1

■ The source reference signal(s) in N TCIs provide a reference for determining common UL TX spatial filter(s) at least for dynamic-grant/configured-grant based PUSCH, all or subset of dedicated PUCCH resources in a CC,

• Optionally, this UL TX spatial filter can also apply to all SRS resources in resource set(s) configured for antenna switching/codebook-based/non-codebook-based UL transmissions

• FFS: applicability of this UL TX spatial filter to SRS configured for beam management (BM)

• FFS: PUSCH port determination based on the TCI, e.g., to be mapped with SRS ports analogous to Rel. 15/16

• Working Assumption: Select between N=1 and N>=1

■ FFS: extension to common QCL information applied to only some of the CORESETs or PUCCH resources in a CC, e.g. for mTRP

■ FFS: When used for the purpose of joint beam indication for UL and DL, whether a joint TCI pool for DL and UL dedicated for the purpose is used, or the same TCI pool as that used for the purpose of separate DL/UL beam indication is used

■ Note: The resulting beam indication directly refers to the associated source RS(s)

■ FFS (RAN1#103-e): Details on extension to intra- and inter-band CA

■ FFS (RAN1#103-e): The supported number of active TCI states considering factors such as multi-TRP and issue 6

■ FFS (RAN1#103-e): Applicable QCL types, and co-existence with DL TCI and spatial relation indication in Rel.15/16

b) In RAN 1# 103 -e, investigate, for the purpose of down selection, the following alternatives for accommodating the case of separate beam indication for UL and DL

■ Alt1. Utilize the joint TCI to include references for both DL and UL beams

■ Alt2. Utilize two separate TCI states, one for DL and one for UL. The TCI state for the DL is the same as agreed in 1a. The TCI state for the UL can be newly introduced.

• Alt 2-1: The UL TCI state is taken from the same pool of TCI states as the DL TCI state

(continued)

| @RAN1 #102e |
| --- |
| **Agreement** |

> • Alt 2-2: The UL TCI state is taken from another pool of TCI states than the DL TCI state
> > ■ Note: The resulting beam indication directly refers to the associated source RS(s)
> > ■ FFS (RAN1#103-e): Details on extension to intra- and inter-band CA
> > ■ Note: This may be related to issue 5 as well as other reasons for different TCIs such as network flexibility/scheduling
>
> c) Support the use of SSB/CSI-RS for BM and/or SRS for BM as source RS to determine a UL TX spatial filter in the unified TCI framework
> > ■ Whether the UL TX spatial filter corresponds to UL TCI (separate from DL TCI) depends on the outcome of 1b) above
> > ■ FFS: Support the use of non-BM CSI-RS and/or non-BM SRS in addition
>
> d) In RAN1#103-e, decide if SRS for BM can be configured as a source RS to represent a DL RX spatial filter in the unified TCI framework
>
> e) In RAN1#103-e, decide/finalize all other parameters included in or concurrent with (but not included in) the TCI, e.g. UL-PC-related parameters (involving PO/alpha, PL RS, and/or closed loop index), UL-timing-related parameters
>
> f) In RAN1#103-e, identify issues pertaining to alignment between DL and UL default beam assumptions using the unified TCI framework
>
> • [Issue 2] For Rel. 17 NR FeMIMO, on L1/L2-centric inter-cell mobility:
> > a) In RAN 1# 103 -e, finalize scope and use cases for L1/L2-centric inter-cell mobility, including:
> > > ■ Applicability in various non-CA and CA setups such as intra-band and inter-band CA
> > > ■ Use cases in comparison to Rel. 15 L3-based handover (HO) taking into account potential extension of DAPS-based Rel. 16 mobility enhancement to FR2-FR2 HO
> > > ■ The extent of RAN2 impact (MAC CE, RRC, user plane protocols)
> > > ■ Network architecture, e.g. NSA vs. SA, inter-RAT scenarios
> >
> > b) In RAN 1# 103 -e, depending on the outcome of 2a), further identify additional components -along with the associated alternatives -required for supporting inter-cell mobility based on the same unified TCI framework as that for intra-cell mobility (including dynamic TCI state update signaling), including
> > > ■ Method(s) for incorporating non-serving cell information associated with TCI
> > > ■ Method(s) for DL measurements and UE reporting (e.g. L1-RSRP) associated with non-serving cell(s)
> > > ■ UE behavior for reception of signals and non-UE-specific control and data channels associated with non-serving cell(s)
> > > ■ UL-related enhancements, e.g. related to RA procedure including TA
> > > ■ Beam-level event-driven mechanism for L1/L2-centric inter-cell mobility
>
> • [Issue 3] For Rel. 17 NR FeMIMO, on dynamic TCI state update signaling medium:
> > a) In RAN 1# 103 -e, investigate, for the purpose of down selection, the following alternatives:
> > > ■ Alt1. DCI
> > > ■ Alt2. MAC CE
> > > ■ Note: Combination between DCI and MAC CE for, e.g. different use cases or control information partitioning can also be considered

(continued)

| |
|---|
| @RAN1 #102e |
| **Agreement** |

■ Note: The study should consider factors such as feasibility for pertinent use cases, performance (based on at least the agreed EVM), overhead (including PDCCH capacity), latency, flexibility, reliability including the support of retransmission

■ Note: This may be related to outcome of issue 1a), 1b), and 6a)

b) In RAN 1# 103 -e, depending on the outcome of 3a), identify candidates for more detailed design issues for the dynamic TCI state update such as

■ Exact content

■ Signaling format

■ Reliability aspects including the support of retransmission

■ Extensions, including the support of UE-group (in contrast to UE-dedicated) signaling

• [Issue 4] For Rel. 17 NR FeMIMO, on MP-UE assumption to facilitate fast UL panel selection:

a) The following assumptions are used:

■ In terms of RF functionality, a UE panel comprises a collection of TXRUs that is able to generate one analog beam (one beam may correspond to two antenna ports if dual-polarized array is used)

■ UE panels can constitute the same as well as different number of antenna ports, number of beams, and EIRP

■ No beam correspondence across different UE panels

■ FFS: For each UE panel, it can comprise an independent unit of PC, FFT timing window, and/or TA.

■ FFS: Same or different sets of UE panels can be used for DL reception and UL transmission, respectively

b) In RAN 1# 103 -e, identify candidate use cases including MPE, and consider remaining aspects if use cases are identified

c) In RAN 1# 103 -e, identify candidate signaling schemes for the following:

■ NW to MP-UE (taking into account potential extension of the unified TCI framework in issue 1)

■ MP-UE to NW

• [Issue 5] For Rel. 17 NR FeMIMO, on MPE mitigation (that is, minimizing the UL coverage loss due to the UE having to meet the MPE regulation), in RAN1#103-e:

a) If needed, identify candidate solutions to be down-selected in future meeting(s). The following sub-categories can be used:

■ CAT0. The need for specification support for MPE event detection and, if needed, candidate solutions

(continued)

| |
|---|
| @RAN1 #102e<br>**Agreement**<br>               ▪ CAT1. The need for UE reporting associated with an MPE and/or a potential/anticipated MPE event if the UE selects a certain UL spatial resource, e.g., corresponding to DL or UL RS<br>               ▪ CAT2. The need for NW signaling in response to the reported MPE event (taking into account issue 1) and UE behavior after receiving the NW signaling<br>               ▪ Note: RAN4 has agreed to specify P-MPR reporting (cf. CRs for TS 38.101/102/133) which can be used as a baseline scheme for further enhancement<br>               ▪ Note: This may be related to outcome of issue 4b)<br>        b) Companies are encouraged to submit evaluation results based on the agreed EVM to justify the benefits of the candidate solutions<br>     • [Issue 6] For Rel. 17 NR FeMIMO,<br>        a) add another category on performing study and, if needed, specifying feature(s) for beam acquisition (including beam tracking and refinement) latency reduction, especially for scenarios with high-speed UEs and large number of configured TCI states<br>        b) Partial BFR will be handled in ITEM 2c (BM enhancement for mTRP)<br>Note: The target "RAN1#103-e" is understood as best-effort, i.e. to finalize as many components as possible based on the status of companies' contributions.<br>@RAN1 #103e |
| Agreement<br>On beam indication signaling medium to support joint or separate DL/UL beam indication in Rel. 17 unified TCI framework:<br>     • Support L I-based beam indication using at least UE-specific (unicast) DCI to indicate joint or separate DL/UL beam indication from the active TCI states<br>        ◦ The existing DCI formats 1_1 and 1_2 are reused for beam indication<br>        ◦ Support a mechanism for UE to acknowledge successful decoding of beam indication<br>            ▪ The ACK/NAK of the PDSCH scheduled by the DCI carrying the beam indication can be used as an ACK also for the DCI<br>            ▪ FFS: Whether any additional specification support is needed<br>     • Support activation of one or more TCI states via MAC CE analogous to Rel.15/16:<br>        o At least for the single activated TCI state, the activated TCI state is applied<br>        o The content for the MAC CE is determined based on the outcome of issue 1<br>        o FFS: If supported, default TCI state when more than one TCI states are activated by MAC CE<br>        ◦ Note: There is no implications on the support of single TRP or multi-TRP<br>     • FFS: Additional enhancement such as L I-based beam indication with group-common DCI<br>     • FFS: Whether the Rel.17 beam indication can also apply to beam indication for single channel (e.g. PDSCH only, single CORESET) or a subset of channels<br>     • FFS: Additional details on extending the support of L1-based beam indication when separate UL (from DL) common beam indication is configured |
| Agreement<br>On Rel-17 unified TCI framework, to accommodate the case of separate beam indication for UL and DL: |

(continued)

| Agreement |
| --- |
| • Utilize two separate TCI states, one for DL and one for UL.<br><br>    ◦ FFS: Contents of separate UL TCI state<br><br>    ◦ Note: For FR1, UE does not expect UL TCI to provide a reference for determining common UL TX spatial filter(s), if UL TCI is supported for FR1<br><br>• For the separate DL TCI:<br><br>    o The source reference signal(s) in M TCIs provide QCL information at least for UE-dedicated reception on PDSCH and for UE-dedicated reception on all or subset of CORESETs in a CC<br><br>• For the separate UL TCI:<br><br>    ◦ The source reference signal(s) in N TCIs provide a reference for determining common UL TX spatial filter(s) at least for dynamic-grant/configured-grant based PUSCH, all or subset of dedicated PUCCH resources in a CC<br><br>    ◦ Optionally, this UL TX spatial filter can also apply to all SRS resources in resource set(s) configured for antenna switching/codebook-based/non-codebook-based UL transmissions<br><br>• FFS: Whether the UL TCI state is taken from a common/same or separate TCI state pool from DL TCI state<br><br>    ◦ Note that TCI state pool for joint DL and UL beam indication is still FFS<br><br>• FFS: Whether Rel. 17 supports TCI configured for single channel (e.g. PDSCH only, single CORESET)<br><br>• Note: This does not preclude the type of UE supporting only 1 beam tracking loop, i.e. UE reports value of 1 in UE FG 2-62. |
| Conclusion<br>There is no consensus in RAN1 to include the following as part of RAN1 agreement for AI 8.1.1 in RAN1 #103e:<br><br>• FFS beam indication for the TCI state assumption/update for the following cases:<br><br>    ◦ The beam indication UE-specific DCI (i.e. the CORESETs with the DCI received by UE), the scheduled PDSCH by the DCI and the associated PUCCH for the acknowledgment of the beam indication DCI<br><br>    ◦ Non-UE-specific CORESETs and PUSCH/PDSCH scheduled/activated and PUCCH transmission triggered by non-UE-specific CORESETs |
| Agreement<br>On Rel-17 unified TCI framework, support common TCI state ID update and activation to provide common QCL information and/or common UL TX spatial filter(s) across a set of configured CCs:<br><br>• The above applies to intra-band CA<br><br>• The above applies to joint DL/UL and separate DL/UL beam indications<br><br>• Just as Rel. 16, the RS in the TCI state that provides QCL-TypeA [or QCL-TypeB] shall be in the same CC as the target channel or RS<br><br>• The common TCI state ID implies that the same/single RS determined according to the TCI state(s) indicated by a common TCI state ID is used to provide QCL Type-D indication and to determine UL TX spatial filter across the set of configured CCs<br><br>• FFS: The above also applies to inter-band CA<br><br>• FFS: TCI state pool for CA<br><br>    ◦ Opt-1: sharing a single RRC TCI state pool for the set of configured CCs, e.g., cell-group TCI state pool, or reuse TCI state pool for PDSCH in a reference cell; A CC ID for QCL-Type A RS is absent in a TCI state, and the CC ID for QCL-Type A RS is determined according to a target CC of the TCI state.<br><br>        ▪ FFS: Whether it is possible that a single TCI state in the pool includes all source RSs from different CCs<br><br>    ◦ Opt-2: configuring RRC TCI state pool per individual CC<br><br>• FFS: Whether the Rel-17 common beam update across multiple CCs applies to beam indication for single channel (e.g. PDSCH only, single CORESET), a subset of channels, or all channels |

(continued)

| Agreement |
|---|
| On Rel-17 unified TCI framework:<br>• A pool of joint DL/LTL TCI state is used for joint DL/LTL TCI state update (beam indication).<br>• FFS: The pool for separate DL and UL TCI state update (beam indication)<br>• Note: Here, TCI state pool refers to a pool configured via higher-layer (RRC) signaling<br>• FFS: Whether joint TCI may include UL specific parameter(s) such as UL PC/timing parameters, PL RS, panel-related indication,etc. and if it is included, it is used only for UL transmission of the DL and UL transmissions to which the joint TCI is applied |
| **Agreement** |
| In RAN1#104-e, on the Rel-17 L1-based TCI state update (beam indication) for the unified TCI framework, interested companies are to provide the following:<br>• How to use DCI formats 1_1 and 1_2 for UL-only (in case of separate DL/UL) TCI state update (beam indication)<br> ◦ Note: The agreement implies that DCI formats 1_1 and 1_2 can be used for UL-only TCI state update beam indication).<br> ◦ FFS: Using DCI format 1_1 and 1_2 without DL assignment, and with a new acknowledgment mechanism directly in response to decoding DCI format 1_1 and 1_2, e.g., analogous to SPS PDSCH release<br>• Whether/how to support at least one additional DCI format dedicated for UL-only beam indication (in case of separate DL/UL), including:<br> ◦ Whether the format can also be used for DL-only beam indication (in case of separate DL/UL) and joint DL/UL beam indication<br> ◦ Whether it is a "brand new" format or based on some extension of the existing DCI formats other than 1_1 and 1_2 (e.g. 1_0, 0_0, 0_1, or 0_2) ▪ If UL-related DCI is used, whether it is accompanied with UL grant or not<br> ◦ Acknowledgment mechanism |
| **Agreement** |
| On Rel. 17 DCI-based beam indication:<br>• Regarding application time of the beam indication: if beam indication is received, down-select from the following:<br> ◦ Alt1: the first slot that is at least X ms or Y symbols after the DCI with the joint or separate DL/UL beam indication<br> ◦ Alt2: the first slot that is at least X ms or Y symbols after the acknowledgment of the joint or separate DL/UL beam indication<br> o FFS: whether any existing timing defined for DCI based TCI/spatial relation update can be used for X/Y<br>• FFS: When to apply the minimum indication delay ([0] : when the newly indicated beam is different with the previously indicated beam) |
| **Agreement** |
| On Rel. 17 DCI-based beam indication, the beam application time is to be down-selected or modified from the following:<br>• Alt1: The beam application time can be configured by the gNB based on UE capability<br> ◦ Support a UE capability for the minimum value of beam application time<br> ◦ FFS: the exact minimum values of beam application time supported by UE |

(continued)

| Agreement |
|---|
| On Rel. 17 DCI-based beam indication, the beam application time is to be down-selected or modified from the following:<br>   ◦ FFS: whether existing UE capability can be reused as this UE capability.<br>   ◦ FFS: whether different beam application time values are supported for uplink and downlink<br>   ◦ FFS: whether UE capability needs to be introduced for the maximum value of beam application time<br>  • Alt2: The beam application time is fixed and defined in specification<br>  • Alt3: The beam application time can be configured by the gNB where the minimum value of beam application time is fixed and defined in specification<br>  • Consider multi-panel UE, layer 1/2 inter-cell cases, carrier aggregation aspects |

In addition, an operation of configuring/indicating the common/separate beam update operation with group-common DCI (GC-DCI) is being discussed. In this case, the base station can transmit beam indication/update information for multiple UEs through one DCI transmission, and each of UEs that are reception targets of the GC-DCI can perform a beam update operation through the single GC-DCI reception. However, it is necessary to further determine what information the GC-DCI will deliver and how UE ACK/NACK transmission for the GC-DCI will be performed.

The present disclosure proposes a method of configuring/indicating a beam indication/update of a UE using DCI (e.g., new group-common DCI (GC DCI), new UE-specific DCI) of a base station (BS), and proposes a subsequent UE operation.

Hereinafter, in the present disclosure, a transmission beam to be used when transmitting PUSCH/PUCCH can be interpreted/applied as a transmission beam to be used when transmitting DMRS of PUSCH/PUCCH.

In the present disclosure, '/' can be interpreted as 'and', 'or', or 'and/or' depending on the context.

[Proposal 1]

The following describes in detail a method of indicating/updating a joint and/or separate DL/UL TCI state based beam via GC-DCI and a method of constructing the GC-DCI.

A base station can perform beam indication/update configuration/indication on a plurality of UEs via the GC-DCI based on the following proposals 1-1 or/and 1-2.

[Proposal 1-1]

The base station may indicate beam indication/update information for each of a plurality of UEs via the GC-DCI. That is, the GC-DCI may include beam indication/update information corresponding to the number of UEs that are reception targets.

Specifically, a payload of the GC-DCI may include blocks for each UE. Each block may include a TCI state field (e.g., 3 bit) for indicating the beam indication/update information for the corresponding UE.

In addition, each block of the GC-DCI may include target DL/UL channel/RS combination information to apply beam update in addition to the beam indication/update information for the corresponding UE. Or/and, the target DL/UL channel/RS combination information to apply the beam update may be defined by a fixed rule. For example, the target DL/UL channel/RS combination information may be defined based on at least one of the following 1) to 3).

1) CORESET transmitting the GC-DCI

2) If CORESETPoolIndex is configured to CORESET transmitting the GC-DCI, all/some of CORESET(s) which (is configured to the same BWP as CORESET transmitting the GC-DCI and) is configured with the same CORESETPoolIndex

3) all/some of CORESET(s) configured to the same BWP as CORESET transmitting the GC-DCI

In order to inform the UEs, that are reception targets before GC-DCI transmission, of a block position to which each UE needs to refer, the base station may configure a starting position within the payload to each UE via RRC signaling (see startingBitOfFormat2-3 of DCI format 2_3).

In the construction of each block within the payload of the GC-DCI, the following embodiments may be considered. The following embodiments may be applied individually, or may be applied based on a combination of two or more embodiments.

According to an embodiment, a block for each UE (i.e., a specific UE) may include target DL/UL channel/RS combination information to apply beam update.

For example, a target channel/RS combination may include a specific combination of DL/UL channels/RSs. Specifically, the target channel/RS combination may be constructed as follows.

{PDCCH(CORESET)}, {PDCCH, PDSCH} {PDSCH, PUSCH}, {PUSCH, PUCCH}, {PUSCH, SRS}, {PUSCH, PUCCH, SRS}, {all of DL/UL channel/RSs} or {subset of PUCCH/SRS resources}

Each combination according to the example may be mapped to a codepoint of a specific bit field within each block (e.g., codepoint '00' = {PDCCH(CORESET)}, '01' = {PDCCH, PDSCH}, '10' = {PDSCH, PUSCH}, ...).

According to an embodiment, based on a bit-map consisting of bits corresponding to different CORESETs (to which the same CORESETPoolIndex is configured) with respect to CORESET(s) configured to the same BWP as CORESET transmitting the GC-DCI, specific CORESET(s) to apply beam indication information may be indicated.

According to an embodiment, the base station may perform pre-configuration/pre-activation on the target DL/UL channel/RS combination information to apply the beam update before the GC-DCI transmission (via RRC/MAC CE signaling).

If the target DL/UL channel/RS combination information is configured through the pre-configuration/pre-activation, a field for the target DL/UL channel/RS combination information may not exist in a block for the specific UE.

According to an embodiment, the block for the specific UE may include information representing whether SPS PDSCH/PUSCH is included in the target DL/UL channel/RS to apply the beam update.

Specifically, the block for the specific UE may include information representing whether the target DL/UL channel/RS includes configured-grant (CG) PDSCH/PUSCH (semi-persistent scheduling (SPS) PDSCH/PUSCH) as well as dynamic-grant (DG) PDSCH/PUSCH.

Information about whether the beam update is applied to the SPS PDSCH/PUSCH may be pre-configured/pre-activated via RRC/MAC CE signaling before the GC-DCI transmission.

The operation/configuration related to the TCI state field included in the block for the specific UE is described in detail below.

A TCI state field for beam indication/update may be included in the block for the specific UE. TCI state(s) activated/mapped to (codepoint of) the TCI state field may be the same as TCI state(s) activated for common/separate beam indication/update to UE-specific DCI.

Or/and, separate from the TCI state(s) activated to the UE-specific DCI, the base station may separately construct TCI state(s) for the GC-DCI and activate/map the TCI state(s).

For example, it may be assumed that the target DL/UL channel/RS combination to apply the beam update in relation to the TCI state(s) includes a PDCCH or a PDCCH. The PDCCH may be indicated based on at least one of i) a specific CORESET (CORESET transmitting the GC-DCI), ii) all/some of CORESET(s) to which CORESETPoolIndex is configured, or iii) all/some of CORESET(s) configured to the same BWP as the CORESET transmitting the GC-DCI. In this case, the TCI state(s) may be activated/mapped as follows.

TCI state(s) for the CORESET(s) based on at least one of the i) to iii) may be configured via RRC. The TCI state(s) may be activated/mapped to the TCI state field of the GC-DCI from a lowest index.

As another example, it may be assumed that the target DL/UL channel/RS combination to apply the beam update in relation to the TCI state(s) includes a PDSCH or a PDSCH. TCI state(s) to be activated/mapped to the TCI state field of the GC-DCI may be the same as TCI state(s) (for data) activated to the UE-specific DCI.

Or/and, the TCI state(s) to be activated/mapped to the TCI state field of the GC-DCI may be constructed based on the above-described examples (examples related to PDCCH and PDSCH). Specifically, the TCI state(s) to be activated/mapped to the TCI state field of the GC-DCI may be constructed based on i) TCI state(s) configured/defined based on an example related to the PDCCH, and ii) TCI state(s) configured/defined based on an example related to the PDSCH. For example, the TCI state(s) to be activated/mapped to the TCI state field of the GC-DCI may include an intersection/union of the TCI state(s) according to the i) and the TCI state(s) according to the ii).

Alternatively, up to 128 configurable TCI state pools as it is may be used as the TCI state(s) to be activated/mapped to the TCI state field of the GC-DCI.

In addition, an operation that allows the TCI state(s) activated to the TCI state field of the GC-DCI to be determined/changed based on the target DL/UL channel/RS combination may be considered. That is, the construction of the TCI state(s) activated to the TCI state field of the GC-DCI may vary depending on which combination is the target DL/UL channel/RS combination to apply the beam update.

The construction of the TCI state(s) activated to the TCI state field of the GC-DCI may vary depending on the target DL/UL channel/RS combination (based on a fixed rule/configured via RRC/indicated via DCI) as in the above-described embodiments.

Alternatively, as information for beam indication/update within each block, an SSB index (e.g., indicating a specific SSB among 64 SSBs using up to 6 bits, and/or indicating a specific SSB among N SSBs corresponding to all/some of 64 SSBs as ceil(log2(N)) bit) may be included. Because the SSB will have a global value within a cell, there is an advantage in that respective blocks can have a unified size.

[Proposal 1-2]

The base station may use single information when indicating beam indication/update information for each of a plurality of UEs via the GC-DCI.

According to an embodiment, the single information may be an SSB index. The single information may represent the SSB index in the following form.

The single information may indicate a specific SSB among 64 SSBs using up to 6 bits. And/or, the single information may indicate a specific SSB among N SSBs corresponding to all/some of 64 SSBs as ceil(log2(N)) bit.

According to an embodiment, the single information may be a single TCI state field. TCI state(s) to be activated/mapped for a single TCI state field of the GC-DCI may be activated by independent configuration for each UE. The activation/mapping of the TCI state(s) for the single TCI state field of the GC-DCI may be performed based on the embodiments of the proposal 1-1.

As in the proposal 1-2, the following effects are derived by transmitting the beam indication/update information, that the base station transmits to the plurality of UEs via the GC-DCI, as the single information.

A payload size of the GC-DCI is significantly reduced. An overhead in a DCI reception process of the UE is also reduced.

The base station may configure/give, to UEs to receive the GC-DCI, a specific RNTI value required for the GC-DCI reception. The UE may perform blind detection of the GC-DCI using the specific RNTI value in a (common) search space. If the UE succeeds in DCI decoding through the blind detection, the UE may perform reception/transmission beam update for a target DL/UL channel/RS based on the proposal 1-1 and the proposal 1-2.

Specifically, the UE may perform the reception/transmission beam update for the target DL/UL channel/RS as follows.

It may be assumed that a target channel/RS is an UL channel/RS. In this instance, the UE may determine/update a transmission beam of the UL channel/RS as follows.

If a DL RS is indicated as a reference RS, the UE may utilize a transmission beam corresponding to a reception beam that has been used when receiving the DL RS, as the transmission beam of the UL channel/RS.

If an UL RS is indicated as the reference RS, the UE may utilize a transmission beam that has been used when transmitting the UL RS, as the transmission beam of the UL channel/RS.

It may be assumed that the target channel/RS is a DL channel/RS. In this instance, the UE may determine/update a reception beam of the DL channel/RS as follows.

If a DL RS is indicated as a reference RS, the UE may utilize a reception beam that has been used when receiving the DL RS, as the reception beam of the DL channel/RS.

If a UL RS is indicated as the reference RS, the UE may utilize a reception beam corresponding to a transmission beam that has been used when transmitting the UL RS, as the reception beam of the DL channel/RS.

In addition, the following method may be considered in order to flexibly configure a UE that is the reception target of the GC-DCI.

The base station may configure a plurality of RNTI values required for the decoding of the GC-DCI to each UE. The base station may configure a plurality of RNTI values required for the decoding of the GC-DCI to a specific UE. The base station may indicate a specific RNTI value among the configured plurality of RNTI values via higher layer signaling (e.g., RRC/MAC CE signaling). Through the above operation, the base station may configure/indicate the corresponding UE to belong to a specific sub-group of a UE group that is the reception target of the GC-DCI.

Afterwards, the base station may transmit, to each UE sub-group, GC-DCI performing the encoding through RNTI related to the corresponding sub-group in a (common) search space. UEs in the sub-group may receive the GC-DCI through RNTI related to the corresponding sub-group.

The following effects are derived through the above operation.

Due to the mobility of UEs in the group, segmented beam indication may be required. In this regard, the base station may more flexibly configure the range of UEs that are the reception targets of the GC-DCI by utilizing the sub-group within the group. As a specific example, when the base station requires a separate beam indication for specific UEs due to changes in location of respective UEs within the group, the base station may construct the specific UEs as a sub-group and transmit the encoded GC-DCI using RNTI related to the sub-group.

[Proposal 2]

The following describes, in indication/update of a joint and/or separate DL/UL TCI state based beam via GC-DCI, a method of configuring/indicating an ACK/NACK (A/N) PUCCH for the DCI and a subsequent UE operation.

A base station may configure/indicate an ACK/NACK (A/N) PUCCH for the DCI based on at least one of the following methods (methods 1 to 3), when configuring/indicating beam indication/update for a plurality of UEs via GC-DCI based on the proposal 1 (the proposals 1-1 and 1-2).

Method 1)

The base station may pre-configure/pre-define, to each UE, information for at least one of the following 1) or 2) via RRC signaling.

> 1) A specific PUCCH resource (ID) to transmit A/N for the GC-DCI
> 2) K2 value (i.e., (slot/symbol-level) offset value for DCI to PUCCH transmission)

In this instance, a HARQ process ID for the A/N PUCCH resource may be separately configured.

Method 2)

In the same manner as the method 1, information for at least one of the specific PUCCH resource (ID) or the K2 value may be configured to each UE via RRC, and the following operation/configuration maybe performed.

(In the proposal 1-1) a block for a specific UE within a payload of the GC-DCI may include a HARQ process ID field and a new date indicator (NDI) field. Based on the fields, the base station may dynamically indicate HARQ process ID information and NDI information for an A/N PUCCH of the specific UE. Based on the above operation, a HARQ process (retransmission) ID and NDI information may be given to the above-described GC-DCI.

Method 3)

Information for at least one of the specific PUCCH resource (ID) or the K2 value (i.e., (slot/symbol-level) offset value for DCI to PUCCH transmission) to transmit A/N for the GC-DCI may be indicated via the GC-DCI according to the proposal 1-1.

(In the proposal 1-1) a block for a specific UE within a payload of the GC-DCI may include a PUCCH resource indicator (PRI) field and a K2 field. Through the fields, the base station may dynamically indicate a PUCCH resource and a K2 value for A/N PUCCH transmission of the specific UE.

In addition, the block for the specific UE may include a HARQ process ID field and a new date indicator (NDI) field. Through this, HARQ process ID information and NDI information for the A/N PUCCH indicated through the PRI may be dynamically indicated. Based on the above operation, a HARQ process (retransmission) ID and NDI may be given to the above-described GC-DCI.

According to the above-described method 2/method 3, the block for the specific UE mentioned in the proposal 1-1 includes A/N PUCCH related information in addition to target DL/UL channel/RS combination information and TCI state information.

Specifically, the block for the specific UE may additionally include at least one field of a PRI field, a K2 field, a HARQ process ID field, or an NDI field.

Based on the methods 1 to 3, the UE may operate as follows.

After the UE receives GC-DCI of beam indication/update use, the UE may check information about transmitting A/N information for the DCI using which PUCCH resource in which slot and may transmit the A/N PUCCH.

The UE may grasp information about whether the GC-DCI corresponds to initial transmission or retransmission based on the HARQ process ID or/and NDI information configured/indicated to the PUCCH resource by the base station. Hence, the DCI transmission/retransmission operation between the BS and the UE may be smoothly performed. Specifically, the DCI transmission/retransmission operation between the BS and the UE and the beam update operation may be performed as follows.

> Example 1) the base station has transmitted DCI, but the UE misses the DCI (UE's miss) → the base station initially transmits the DCI again
>
> Example 2) the base station has transmitted DCI, and the UE transmits Ack after succeeding in decoding → the UE can normally perform beam update (afterwards, the base station performs an indication for new DCI transmission through NDI toggling when using the same HARQ process ID in DCI transmission)
>
> Example 3) the base station has transmitted DCI, and the UE transmits Nack after failing in decoding → the base station maintains a HARQ process ID as it is and maintains an NDI field as it is upon DCI retransmission to performs the DCI retransmission on the UE → the UE recognizes that the DCI is retransmission DCI and receives the DCI
>
> Example 4) the base station has transmitted DCI and the UE has transmitted Ack/Nack after succeeding/failing in decoding, but the base station misses the Ack/Nack → the base station initially transmits the DCI again

When the A/N PUCCH for the DCI according to the proposal 2 has collided with other A/N PUCCH, the UE may perform A/N piggyback and reconstruct a HARQ-ACK codebook. Through this, the UE may transmit multiple A/N PUCCHs (for PDCCH/PDSCH) using a single PUCCH resource. For example, the other A/N PUCCH may include at least one of i) A/N PUCCH for the DCI, ii) A/N for DCI for SPS PDSCH/PUSCH reception/transmission and release, or iii) A/N PUCCH for PDSCH.

That is, Type 1 HARQ-ACK codebook (A/N codebook construction by K2 value) and/or Type 2 HARQ-ACK codebook (A/N codebook construction using DAI information) of the existing standard operation are enhanced, and can be utilized when the HARQ-ACK codebook collides with an A/N different from the A/N for the PDCCH. And/or, when constructing the HARQ-ACK codebook in an A/N collision situation, the following operation may be considered. The base station may configure/indicate a location of A/N for the DCI. The UE may determine that A/N for the DCI is of high importance and construct the HARQ-ACK codebook so that the A/N for the DCI is MSB. In other words, the UE may construct the HARQ-ACK codebook so that A/N for the DCI is located at the front most bit as MSB.

In other embodiments for the proposal 1/proposal 2, the following operation/configuration may be considered. A TCI state(s) combination activated to UE-specific DCI of each UE within a group via the GC-DCI may be indicated. The activated TCI state(s) combination may be a TCI state(s) combination activated for PDSCH or/and common beam update.

That is, a TCI state(s) combination to be activated in a TCI state field (e.g., 3 bits) of UE-specific DCI of each UE may be determined through a dynamic indication via GC-DCI not MAC CE signaling. The corresponding method is described in detail below.

A payload of the GC-DCI may include blocks (e.g., up to 8 blocks when the TCI state field within the UE-specific DCI is 3 bits) as many as the number of TCI states to be activated in UE-specific DCI of each UE. In each block, candidate TCI state(s) capable of being activated for each codepoint of a field (e.g., TCI state 3-bit field) for TCI state indication of the UE-specific DCI may exist as n-bit. In this instance, the number of blocks within the DCI may be less than 8. The blocks may be utilized for TCI state update of some codepoints of the TCI state field. When the number of blocks within the DCI is less than 8, the TCI state may be activated for a first block from the lowest codepoint (e.g., when the number of blocks is 5, the TCI state is activated for 5 codepoints including 000).

For the above operation, a TCI state pool to be activated for each block may be predefined/pre-configured (RRC)/pre-updated (MAC-CE) by the base station.

The base station may broadcast a TCI state(s) combination (e.g., 8 combinations) to be commonly activated in UE-specific DCI of each UE within a group via the GC-DCI. The respective UEs may activate the TCI state(s) combination indicated via the GC-DCI to (TCI state field of) UE-specific DCI when succeeding in decoding of the GC-DCI. The operation for UE A/N transmission for the GC-DCI may be performed based on the proposal 2.

The operation of the proposals 1 and 2 may be applied to the operation based on UE-specific DCI as well as the operation based on the GC-DCI. Specifically, the operation based on the above-described embodiments (the operation based on at least one of the proposals 1-1 and 1-2 and the methods 1 to 3 of the proposal 2) may be applied to i) an operation for the base station to transmit beam indication/update information to a plurality of UEs via the GC-DCI, and/or ii) an operation for the base station to transmit beam indication/update information to a single UE via UE-specific DCI.

That is, the GC-DCI may be UE-specific DCI. This embodiment is described in detail below.

For example, all or some of information included in a block for a specific UE within a payload of the GC-DCI may be transmitted via the UE-specific DCI. Specifically, at least one of target DL/UL channel/RS combination information and TCI state field information for beam indication/update in a block for a specific UE within a payload of the GC-DCI of the proposal 1 may be transmitted to a single UE via the UE-specific DCI. At least one of the target DL/UL channel/RS combination information and the TCI state field information for beam indication/update may be pre-configured by the base station. For example, information that is not indicated via the UE-specific DCI may be pre-configured by the base station. For example, the target DL/UL channel/RS combination information and the TCI state field information for beam indication/update may be indicated via the UE-specific DCI without pre-configuration of the base station.

All or some of information for A/N PUCCH transmission of the GC-DCI may be transmitted via the UE-specific DCI. Specifically, all or some of information for A/N PUCCH transmission for DCI of the proposal 2 (e.g., information for at least one of a PRI field, a K2 field, a HARQ process ID field, and a new date indicator (NDI) field) may be transmitted to a single UE via the UE-specific DCI. The information for at least one of the PRI field, the K2 field, the HARQ process ID field, and the NDI field may be separately configured by the base station. For example, information that is not indicated via the UE-specific DCI may be pre-configured by the base station. For example, the information for A/N PUCCH transmission for DCI may be indicated via the UE-specific DCI without pre-configuration of the base station.

In addition, the beam indication/update via the GC-DCI and the UE-specific DCI may be used for the base station to perform reception/transmission beam update of a UE in an idle state (e.g., RRC_IDLE state).

According to the current standard operation, a beam of a UE in an idle state is updated through the following operation. The base station transmits paging for the purpose of wake-up and CORESET beam update of the UE. If a state of the UE is changed to a connected mode (e.g., RRC_CONNECTED state) by the paging, the base station transmits RRC/MAC-CE message to the UE. The beam of the UE in the idle state may be updated through the RRC/MAC-CE message.

However, the above-described paging process is omitted if the bean is updated via the GC-DCI and the UE-specific DCI, and thus overhead/delay may be reduced.

Table 8 below is an agreement related to triggering offset enhancement for aperiodic SRS and SRS triggering enhancement for DCI without data and without CSI.

[Table 8]

| **Agreement** |
|---|
| A given aperiodic SRS resource set is transmitted in the (t+1)-th available slot counting from a reference slot, where t is indicated from DCI, or RRC (if only one value of t is configured in RRC), and the candidate values of t at least include 0. Adopt at least one of the following options for the reference slot.<br><br>&bull; Opt. 1: Reference slot is the slot with the triggering DCI.<br>&bull; Opt. 2: Reference slot is the slot indicated by the legacy triggering offset.<br>&bull; FFS the detailed definition of "available slot" considering UE processing complexity and timeline to determine available slot, potential co-existence with collision handling, etc., e.g.,<br>    &#9702; Based on only RRC configuration, "available slot" is the slot satisfying: there are UL or flexible symbol(s) for the time-domain location(s) for all the SRS resources in the resource set and it satisfies the minimum timing requirement between triggering PDCCH and all the SRS resources in the resource set<br>&bull; FFS explicit or implicit indication of t<br>&bull; FFS whether updating candidate triggering offsets in MAC CE may be beneficial |
| **Agreement** |
| Support at least DCI 0_1 and 0_2 to trigger aperiodic SRS without data and without CSI.<br>    &bull; FFS whether/how to re-purpose the unused fields, e.g., the triggering offset(s) and the frequency resources for triggering A-SRS on one or more component carriers, SFI-index, etc. |
|     &bull; FFS UL/DL DCI with data for aperiodic SRS<br>    &bull; FFS group common DCI |

[Proposal 3]

The following describes a dynamic beam indication/update operation and an SRS trigger operation of a base station through the above-described new (UE-specific/Group-common) DCI format and a subsequent UE operation therefor.

The base station may perform the beam indication/update of the UE based on at least one of the proposal 1 and the proposal 2 through the new (UE-specific/Group-common) DCI format. At the same time as this, the base station may perform the SRS trigger. Specifically, a payload of the (UE-specific/Group-common) DCI may include a field according to at least one of the following i) to iii).

    i) SRS request field

ii) Aperiodic SRS slot offset indication field
iii) Symbol-level offset indication field for aperiodic SRS symbol-level starting position

The base station may trigger an aperiodic SRS of the UE via the (UE-specific/Group-common) DCI.

At least one aperiodic SRS resource set may be configured/concatenated/mapped to a specific codepoint of the SRS request field (e.g., 2 bits) via RRC configuration or/and MAC CE activation. If the base station indicates the specific codepoint, the UE may transmit at least one aperiodic SRS resource set concatenated to the specific codepoint. In particular, "no trigger" is mapped to the lowest codepoint (e.g., "00") in the SRS request field, and thus the base station may use it to trigger the SRS.

If RRC configuration or/and MAC CE activated slot offsets are two or more in the aperiodic SRS slot offset indication field, they may be configured/concatenated/mapped to the lowest codepoint from the small slot offset.

For the aperiodic SRS resource set(s) to which the tiger is indicted in the symbol-level offset indication field through the SRS request field, symbol-level offset values (e.g., -7, -6, ..., -1, [0], +1, +2, ..., +6, +7) for shifting at once symbol-level positions of SRS resources within the corresponding set(s) may be configured/concatenated/mapped to the lowest codepoint in ascending order.

In addition to the fields, the DCI may include a cell indication field for triggering SRS (SRS of reciprocity-based DL channel acquisition use) of PUSCH-less SCell.

Even if the cell indication field is not present or is present in the DCI, when PCell as a specific codepoint is indicated, the UE may recognize that an SRS resource set configured to the PCell (in a specific BWP) is triggered.

On the other hand, the base station may pre-configure SCell(s) to be concatenated to the cell indication field and indicate, to the UE, a specific SCell among the SCell(s) configured using the cell indication field. The UE may recognize that an SRS resource set (of "antenna switching" use of PUSCH-less SCell) configured within the SCell (in a specific BWP) is triggered.

Depending on a channel environment, specific UE(s) in a group may not require a beam update. An embodiment related thereto is described.

When beam indication/update is performed in new (UE-specific/Group-common) DCI format based on at least one of the proposal 1 and the proposal 2, the following operation may be considered. A codepoint called "no indication/update" may be mapped to a TCI state field that is a field for indicating QCL type-D reference RS/spatial relation info (reception/transmission beam reference RS). For example, the lowest codepoint of the TCI state field may be mapped/configured to represent "no indication/update".

When the base station indicates the codepoint through the TCI state field, a UE receiving DCI (including the TCI state field) may not perform beam update. Such a BS-UE operation may be used when the base station broadcasts the DCI for a UE group while the DCI is GC-DCI. This is because a specific UE may not require the beam update due to the slowly changing channel environment.

A codepoint of a TCI state field representing the "no indication/update" may be used as follows. As the SRS request field includes a filed corresponding to "no trigger", only a beam indication may be performed or only an SRS trigger may be performed on a UE receiving the new (UE-specific/Group-common) DCI format.

The UE does not expect that a beam indication/update (TCI state field) is "no indication/update" for the new (UE-specific/Group-common) DCI format and an SRS request field is "no trigger".

In addition, a method is proposed to indicate an SRS transmission beam via DCI capable of simultaneously performing the beam indication/update and the SRS request as above.

The base station may configure/indicate, to the UE, so that a reference RS indicated through the beam indication/update is used to determine a transmission beam of a triggered SRS resource set. Specifically, the UE may use a reference RS indicated through a TCI state of the DCI (e.g., a reference RS indicated by QCL type-D reference RS/spatial relation info) to determine a transmission beam of at least one SRS resource set triggered by the DCI.

That is, the UE may transmit a triggered aperiodic SRS using a reception/transmission beam reference RS indicated by the DCI as spatial relation info for determining a transmission beam, instead of spatial relation info configured to each SRS resource within triggered aperiodic SRS resource set(s).

[Proposal 4]

The following describes a method of performing dynamic beam indication/update and/or SRS trigger in relation to DL grant DCI and a subsequent UE operation.

Specifically, in the DL grant DCI (e.g., DCI format 1_1, 1_2, etc.), embodiments related to operations of the following 1) and 2) are described.

1) A method of performing dynamic beam indication/update and/or SRS trigger without data scheduling (BS operation), and 2) a subsequent UE operation

A base station improves a method of offing data scheduling of DL grant DCI in order to indicate a dormancy SCell group without SCell dormancy indication field, and thus the dynamic beam indication/update and/or the SRS trigger can be performed as follows.

That is, in a frequency domain resource assignment (FDRA) field for PDSCH of DL grant DCI, it may be assumed that all bits of the FDRA field are set to specific value(s).

As a detailed example, all bits of frequency domain resource assignment may be set to 0 for resource allocation type 0, or set to 1 for resource allocation type 1, or set to 0 or 1 for a dynamic switch resource allocation type.

If the FDRA field is configured as above, the data scheduling may be "off", and the following fields related to the data scheduling may be used to perform the dynamic beam indication/update and/or the SRS trigger.

The following fields show examples of the data scheduling.

- Modulation and coding scheme of transport block 1 (5 bit)
- New data indicator of transport block 1 (1 bit)
- Redundancy version of transport block 1 (2 bit)
- HARQ process number (4 bit)
- Antenna port(s) (4, 5, or 6 bit)
- DMRS sequence initialization (1 bit)

Specifically, if conditions for indicating the dormancy SCell group without the SCell dormancy indication field are satisfied (i.e., if the dormancy SCell group is indicated), the fields may be used for SCell dormancy indication (e.g., max 5 bits). Remaining bit field(s) except a bit width for the SCell dormancy indication may be used for beam indication/update and SRS trigger.

For example, all/some of TCI state field (3 bit), [target channel/RS combination field], SRS slot (symbol) offset indication field, and [SRS slot offset indication field] may be concatenated to the fields. In this instance, a field for the beam indication/update and the SRS trigger may be concatenated to each field for the data scheduling based on order of fields for the data scheduling.

For example, an MCS field may be used for the SCell dormancy indication. As an example, an Antenna port(s) field may be used as a TCI state field. That is, the Antenna port(s) field may be configured to represent a TCI state for reception/transmission beam indication (for a specific target channel/RS) of a UE.

A TCI state(s) combination to be configured/concatenated/associated/mapped to the Antenna port(s) field may be separately configured by the base station via RRC signaling or may be activated via MAC CE signaling. Alternatively, the TCI state(s) combination to be configured/concatenated/associated/mapped to the Antenna port(s) field may be i) a TCI state(s) combination pre-activated to UE-specific DCI or ii) a TCI state(s) combination determined based on the proposal 1.

Or/and, an RV field may be used for SRS slot (symbol) offset indication.

In addition, since the data scheduling has been "off", fields for A/N PUCCH transmission indication for PDSCH may be used for A/N PUCCH resource transmission indication for DCI. For example, a PRI field, a K2 field, a HARQ process number field, an NDI field, etc. may be used for A/N PUCCH resource transmission indication for the DL grant DCI without data.

Alternatively, if the fields for data scheduling are not used to indicate the dormancy SCell group without the SCell dormancy indication field (i.e., if the dormancy SCell group is not indicated), the corresponding fields may be used for the beam indication/update and the SRS trigger.

In the bit field (i.e., the fields for data scheduling), all/some of TCI state field (3 bit), [target channel/RS combination field], SRS slot offset indication field, and [SRS slot offset indication field] may be concatenated to the fields. In this instance, a field for the beam indication/update and the SRS trigger may be concatenated to each field for the data scheduling based on order of the fields for data scheduling.

For example, an MCS field may be used as a TCI state field. That is, the MCS field may be configured to represent a TCI state for reception/transmission beam indication (for a specific target channel/RS) of the UE.

A TCI state(s) combination to be configured/concatenated/associated/mapped to the MCS field may be separately configured by the base station via RRC signaling or may be activated via MAC CE signaling. Alternatively, the TCI state(s) combination to be configured/concatenated/associated/mapped to the MCS field may be i) a TCI state(s) combination pre-activated to UE-specific DCI or ii) a TCI state(s) combination determined based on the proposal 1.

For example, an RV field may be used for SRS slot offset indication.

In addition, since the data scheduling has been "off", fields for A/N PUCCH transmission indication for PDSCH may be used for A/N PUCCH resource transmission indication for DCI. For example, a PRI field, a K2 field, a HARQ process number field, an NDI field, etc. may be used for A/N PUCCH resource transmission indication for the DL grant DCI without data.

[Proposal 5]

The following describes a method of performing dynamic beam indication/update and/or SRS trigger in relation to UL grant DCI and a subsequent UE operation.
Specifically, in the UL grant DCI (e.g., DCI format 0_1, 0_2, etc.), embodiments related to operations of the following 1) and 2) are described.

1) A method of performing dynamic beam indication/update and/or SRS trigger without data scheduling (BS operation), and 2) a subsequent UE operation

[Proposal 5-1]

A base station improves a method of offing data scheduling of DL grant DCI in order to indicate a dormancy SCell group without SCell dormancy indication field, and thus the dynamic beam indication/update and/or the SRS trigger can be performed as follows.
That is, in a frequency domain resource assignment (FDRA) field for PUSCH of UL grant DCI, it may be assumed that all bits of the FDRA field are set to specific value(s).
As a detailed example, all bits of frequency domain resource assignment may be set to 0 for resource allocation type 0, or set to 1 for resource allocation type 1, or set to 0 or 1 for a dynamic switch resource allocation type.
If the FDRA field is configured as above, the data scheduling may be "off", and the following fields related to the data scheduling may be used to perform the dynamic beam indication/update and/or the SRS trigger.
The following fields show examples of the data scheduling.

- Modulation and coding scheme of transport block 1 (5 bit)
- New data indicator of transport block 1 (1 bit)
- Redundancy version of transport block 1 (2 bit)
- HARQ process number (4 bit)
- Antenna port(s) (4, 5, or 6 bit)
- DMRS sequence initialization (1 bit)

Specifically, in the bit field, all/some of TCI state field (3 bit), [target channel/RS combination field], SRS slot offset indication field, and [SRS slot (symbol) offset indication field] may be concatenated to the fields. In this instance, a field for the beam indication/update and the SRS trigger may be concatenated to each field for the data scheduling based on order of fields for the data scheduling.
As an example, an Antenna port(s) field or/and an MCS field may be used as a TCI state field. That is, the Antenna port(s) field or/and the MCS field may be configured to represent a TCI state for reception/transmission beam indication (for a specific target channel/RS) of a UE.
A TCI state(s) combination to be configured/concatenated/associated/mapped to the Antenna port(s) field or/and the MCS field may be separately configured by the base station via RRC signaling or may be activated via MAC CE signaling. Alternatively, the TCI state(s) combination to be configured/concatenated/associated/mapped to the Antenna port(s) field or/and the MCS field may be i) a TCI state(s) combination pre-activated to UE-specific DCI or ii) a TCI state(s) combination determined based on the proposal 1.
Or/and, an RV field may be used for SRS slot (symbol) offset indication.
In addition, since the data scheduling has been "off", fields for HARQ related indication for PUSCH may be used for A/N PUCCH resource transmission indication for DCI. For example, a HARQ process number field, an NDI field, etc. may be used for A/N PUCCH resource transmission indication for the UL grant DCI without data. The Antenna port(s) field or/and a DMRS sequence initialization field may be used for PRI indication (e.g., 3 bits) and K2 (symbol/slot level offset for DCI to PUCCH transmission) indication.

[Proposal 5-2]

The following describes a method of utilizing fields related to data scheduling based on configuration for an UL-SCH indicator (field) and a CSI request (field) of UL grant DCI.
If the UL-SCH indicator is set to zero, the UE does not transmit the PUSCH. If the CSI request is set to all zero(s), the UE does not transmit the CSI (i.e., the CSI request (field) representing 'no CSI').

In the UL grant DCI, the configuration of "UL-SCH indicator of "0" and CSI request of all zero(s)" may be defined/configured in an "off" method of the data scheduling. Specifically, if i) the UL-SCH indicator is set to 0 and ii) the CSI request is set to all zero(s), it may be defined/configured so that it is assumed that data scheduling becomes "off".

If the data scheduling becomes "off" based on the configuration of the UL-SCH indicator and the CSI request, the following fields related to the data scheduling may be used to perform the dynamic beam indication/update and/or the SRS trigger.

The following fields show examples of the data scheduling.

- Modulation and coding scheme of transport block 1 (5 bit)
- New data indicator of transport block 1 (1 bit)
- Redundancy version of transport block 1 (2 bit)
- HARQ process number (4 bit)
- Antenna port(s) (4, 5, or 6 bit)
- DMRS sequence initialization (1 bit)

Specifically, in the bit field, all/some of TCI state field (3 bit), [target channel/RS combination field], SRS slot offset indication field, and [SRS slot (symbol) offset indication field] may be concatenated to the fields. In this instance, a field for the beam indication/update and the SRS trigger may be concatenated to each field for the data scheduling based on order of fields for the data scheduling.

As an example, an Antenna port(s) field or/and an MCS field may be used as a TCI state field. The Antenna port(s) field or/and the MCS field may be configured to represent a TCI state for reception/transmission beam indication (for a specific target channel/RS) of the UE.

A TCI state(s) combination to be configured/concatenated/associated/mapped to the Antenna port(s) field or/and the MCS field may be separately configured by the base station via RRC signaling or may be activated via MAC CE signaling. Alternatively, the TCI state(s) combination to be configured/concatenated/associated/mapped to the Antenna port(s) field or/and the MCS field may be i) a TCI state(s) combination pre-activated to UE-specific DCI or ii) a TCI state(s) combination determined based on the proposal 1.

Or/and, an RV field may be used for SRS slot (symbol) offset indication.

In addition, since the data scheduling has been "off", fields for HARQ related indication for PUSCH may be used for A/N PUCCH resource transmission indication for DCI. For example, a HARQ process number field, an NDI field, etc. may be used for A/N PUCCH resource transmission indication for the UL grant DCI without data. The Antenna port(s) field or/and a DMRS sequence initialization field may be used for PRI indication (e.g., 3 bits) and K2 (symbol/slot level offset for DCI to PUCCH transmission) indication.

In the proposals 4 and 5, the following method may be additionally considered.

A cell indication field may be additionally considered to fields for the beam indication/update and the SRS trigger. That is, the cell indication field may be concatenated to one of the fields for the data scheduling.

Specifically, the cell indication field for triggering an SRS of PUSCH-less SCell in DCI in which the data scheduling is "off" may be concatenated to a field related to the data scheduling. The SRS of the PUSCH-less SCell may be an SRS of reciprocity based DL channel acquisition use.

Even if the cell indication field is not present or is present in the DCI, when PCell as a specific codepoint is indicated, the UE may recognize that an SRS resource set configured to the PCell (in a specific BWP) is triggered.

On the other hand, the base station may pre-configure SCell(s) to be concatenated to the cell indication field and indicate, to the UE, a specific SCell among the SCell(s) configured using the cell indication field. The UE may recognize that an SRS resource set (of "antenna switching" use of PUSCH-less SCell) configured within the SCell (in a specific BWP) is triggered.

The Antenna port(s) field or/and the DMRS sequence initialization field may be used as the cell indication field.

An example of the UE (or BS) operation based on at least one of the above-described embodiments (e.g., at least one of the proposals 1 to 5 (the proposals 1-1 and 1-2 of the proposal 1, the methods 1, 2 and 3 of the proposal 2, the proposal 3, the proposal 4, and the proposal 5 (the proposals 5-1 and 5-2))) is as follows.

1) Reception (transmission) of configuration information related to DL/UL joint or separate TCI (e.g., joint TCI framework)

The configuration information may include a target RS/channel combination that is a target of beam indication/update.

The configuration information may include beam information that is a candidate for beam indication/update.

The configuration information may include configuration information for A/N transmission for DCI.

The configuration information may include configuration information for an aperiodic SRS.

2) Reception (transmission) of a message indicating update of a beam related to a specific target RS/channel combination (e.g., reference RS or TCI state ID)

The message may be GC-DCI or UE-specific DCI.

For the GC-DCI, information for a plurality of UEs in a group may be transmitted through multiple blocks.

For the GC-DCI, the message may include TCI state(s) combination information to be activated to UE-specific DCI of a plurality of UEs in a group.

The message may include indication information for A/N transmission for DCI.

The message may include SRS request information (e.g., SRS request field, slot offset indication field, symbol offset indication field, etc.).

3) The UE performs a beam update operation for (A/N PUCCH transmission and) the specific target RS/channel combination based on the message, or/and transmits an aperiodic SRS.

The UE/BS operation is merely an example, and each operation (and step) is not necessarily essential. Based on the UE/BS implementation method, the update and SRS transmission related operations of the reception/transmission beam of the UE according to the above-described embodiments may be omitted or added.

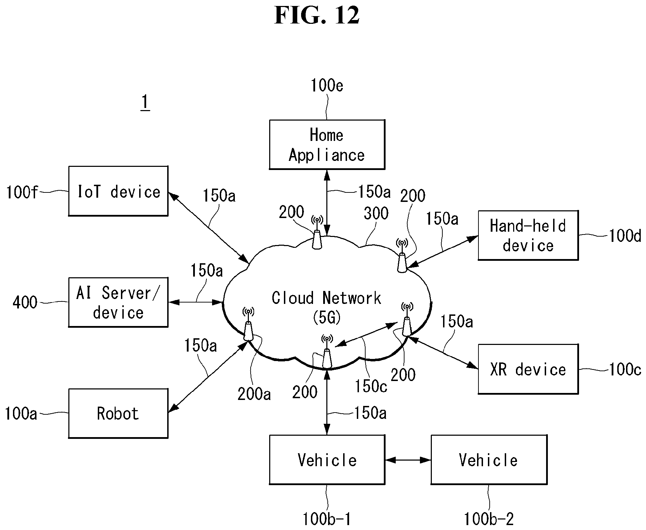

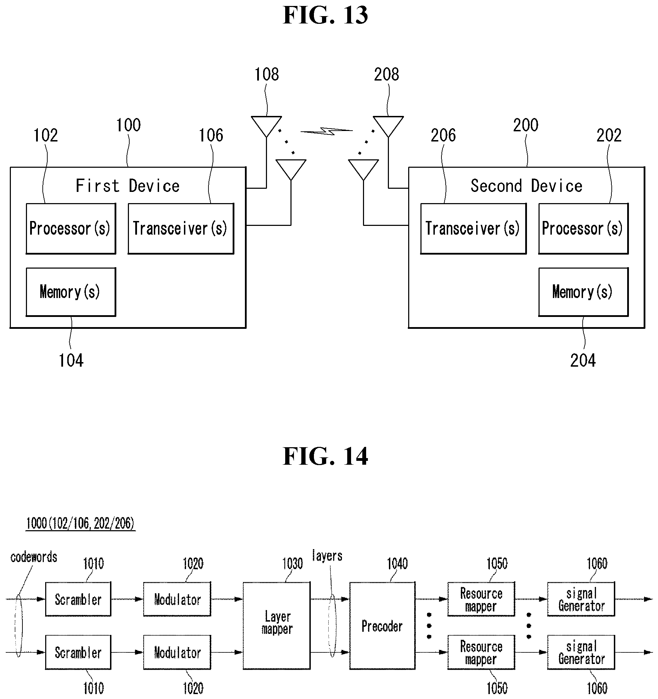

From an implementation perspective, the operations (e.g., the update and SRS transmission related operations of the reception/transmission beam of the UE based on at least one of the proposals 1/2/3/4/5) of the BS/UE according to the above-described embodiments may be processed by a device (e.g., processors 102 and 202 of FIG. 13) of FIGS. 12 to 16 to be described later.

The operations (e.g., the update and SRS transmission related operations of the reception/transmission beam of the UE based on at least one of the proposals 1/2/3/4/5) of the BS/UE according to the above-described embodiments may be stored in a memory (e.g., memories 104 and 204 of FIG. 13) in the form of commands/programs (e.g., instructions, executable codes) for running at least one processor (e.g., processors 102 and 202 of FIG. 13).

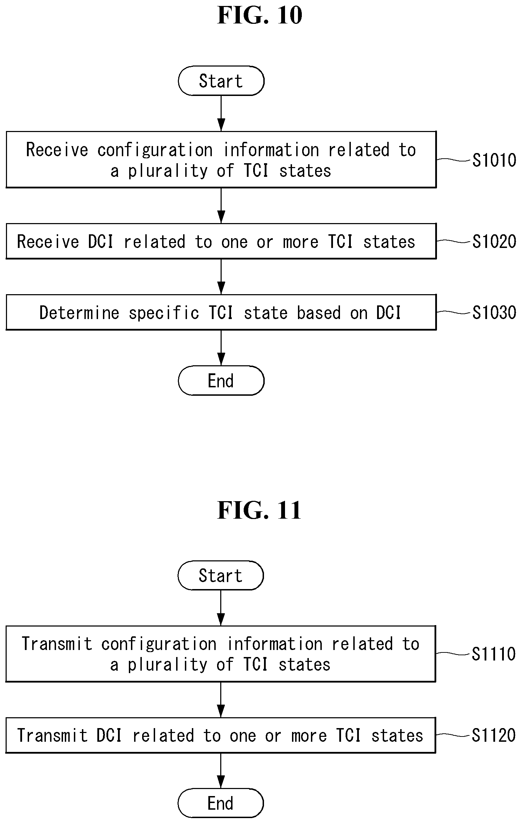

Hereinafter, the above-described embodiments are described in detail from a UE operation perspective with reference to FIG. 10. Methods to be described below are merely distinguished for convenience of explanation, and thus it is obvious that partial configuration of any method can be substituted or combined with partial configuration of another method.

FIG. 10 is a flowchart illustrating a method for a UE to receive downlink control information in a wireless communication system according to an embodiment of the present disclosure.

Referring to FIG. 10, a method for a UE to receive downlink control information in a wireless communication system according to an embodiment of the present disclosure comprises a step S 1010 of receiving configuration information related to a plurality of TCI states, a step S 1020 of receiving DCI related to one or more TCI states, and a step S 1030 of determining a specific TCI state based on the DCI.

In the step S 1010, the UE receives, from a base station, configuration information related to a plurality of transmission configuration indication (TCI) states. The configuration information may include information (e.g., information related to at least one of target RS/channel combination, TCI state(s) combination, A/N PUCCH, and SRS triggering) based on the proposals 1 to 5.

According to the step S1010, an operation of the UE (100/200 of FIGS. 12 to 16) to receive the configuration information related to the plurality of TCI states from the base station (100/200 of FIGS. 12 to 16) may be implemented by a device of FIGS. 12 to 16. For example, referring to FIG. 13, one or more processors 102 may control one or more transceivers 106 and/or one or more memories 104 so as to receive the configuration information related to the plurality of TCI states from the base station 200.

In the step S 1020, the UE receives, from the base station, downlink control information (DCI) related to one or more TCI states of the plurality of TCI states.

The DCI may include one or more fields related to a pre-configured UE group. The one or more fields may be information based on the proposals 1 to 5.

Information related to one or more targets to which the specific TCI state is applied may be determined based on the one or more fields.

According to an embodiment, the one or more targets may be based on a combination of at least one of i) a physical downlink control channel (PDCCH), ii) a physical downlink shared channel (PDSCH), iii) a downlink reference signal (DL RS), iv) a physical uplink control channel (PUCCH), v) a physical uplink shared channel (PUSCH), or vi) an uplink reference signal (UL RS).

According to an embodiment, whether at least one of a semi-persistent PDSCH or a semi-persistent PUSCH is included in the one or more targets may be determined based on the one or more fields. The present embodiment may be based on the proposal 1-1.

According to an embodiment, the one or more fields may be based on one or more specific blocks, and each of the one or more specific blocks may include information for each UE within the pre-configured UE group. The present embodiment may be based on the proposal 1-1.

The information for each UE within the pre-configured UE group may include at least one of i) information representing the specific TCI state or ii) information representing a combination related to the one or more targets.

The information representing the combination related to the one or more targets may be based on a codepoint of a specific bit field. A specific combination may be mapped to the codepoint.

The specific combination may include one or more signals determined based on at least one of a type of a physical channel, to which the specific TCI state is applied, or a control resource set (CORESET) related to the DCI.

For example, the type of the physical channel may be based on a physical control channel or a physical shared channel. In this case, the specific combination may include {PDCCH, PUCCH} and/or {PDSCH, PUSCH}.

For example, the specific combination may include a physical downlink control channel (PDCCH) related to a specific CORESET within a bandwidth part (BWP) in which the CORESET related to the DCI is configured. In this case, the specific combination may be configured in the form of {PDCCH (CORESET)}.

The specific CORESET may be based on a CORESET configured with the same CORESET pool index as a CORESET pool index of the CORESET related to the DCI among CORESETs within the BWP.

According to an embodiment, the information representing the specific TCI state may be based on a TCI state field to which the one or more TCI states are mapped. The present embodiment may be based on the proposal 1-1.

The one or more TCI states may be based on i) one or more TCI states activated to UE-specific DCI or ii) one or more TCI states configured to one or more CORESETs within a bandwidth part (BWP) in which the CORESET related to the DCI is configured.

According to an embodiment, a location of a specific block related to the UE among the one or more specific blocks within a payload of the DCI may be determined based on pre-configured location information (e.g., starting position related information). The present embodiment may be based on the proposal 1-1.

According to an embodiment, the one or more fields may be based on one TCI state field. The present embodiment may be based on the proposal 1-2. A pre-configured TCI state combination may be mapped to a codepoint of the one TCI state field. The pre-configured TCI state combination may be TCI state(s) based on the proposal 1-1. For example, the pre-configured TCI state combination may be based on i) one or more TCI states activated to UE-specific DCI or ii) one or more TCI states configured to one or more CORESETs within a bandwidth part (BWP) in which the CORESET related to the DCI is configured.

According to an embodiment, one or more specific radio network temporary identifiers (RNTIs) related to the DCI may be configured. A blind detection for a reception of the DCI may be performed based on one of the one or more specific RNTIs. The present embodiment may be based on the proposal 1.

According to an embodiment, the UE may transmit HARQ-ACK information related to the DCI to the base station. That is, the above method may further comprise a step of transmitting the HARQ-ACK information related to the DCI.

Information related to a transmission of the HARQ-ACK information may be i) pre-configured via RRC signaling or ii) determined based on the one or more fields. The present embodiment may be based on the proposal 2.

For example, the one or more fields may be based on one or more specific blocks, and each of the one or more specific blocks may include information for each UE within the pre-configured UE group.

Each of the one or more specific blocks may include at least one of i) a HARQ process ID field, ii) a new date indicator (NDI) field, iii) a PUCCH resource indicator (PRI) field, or iv) a field (K2 field) representing an offset for the transmission of the HARQ-ACK information.

According to an embodiment, the DCI may include information related to a triggering of at least one of the one or more targets. The present embodiment may be based on the proposal 3.

According to an embodiment, based on 1) the DCI being DL grant DCI or UL grant DCI, and 2) all bits of a frequency domain resource assignment (FDRA) field within the DCI being configured to a specific value, one or more fields of fields related to a data scheduling of the DCI may be configured to be associated with one or more specific fields. The present embodiment may be based on the proposal 4 and/or the proposal 5.

The one or more specific fields may include at least one of i) a field representing the specific TCI state, ii) a field representing a combination related to the one or more targets, or iii) a field related to a triggering of at least one of the one or more targets.

According to the step S1020, an operation of the UE (100/200 of FIGS. 12 to 16) to receive the downlink control information (DCI) related to the one or more TCI states of the plurality of TCI states from the base station (100/200 of FIGS. 12 to 16) may be implemented by the device of FIGS. 12 to 16. For example, referring to FIG. 13, one or more processors 102 may control one or more transceivers 106 and/or one or more memories 104 so as to receive the DCI related to the one or more TCI states of the plurality of TCI states from the base station 200.

In the step S1030, the UE determines a specific TCI state among the one or more TCI states based on the DCI.

A beam update operation may be performed based on the specific TCI state. Specifically, a beam or a spatial filter commonly used for uplink transmission and/or downlink reception may be determined based on the specific TCI state.

According to the step S1030, an operation of the UE (100/200 of FIGS. 12 to 16) to determine the specific TCI state among the one or more TCI states based on the DCI may be implemented by the device of FIGS. 12 to 16. For example, referring to FIG. 13, one or more processors 102 may control one or more transceivers 106 and/or one or more memories 104 so as to determine the specific TCI state among the one or more TCI states based on the DCI.

Hereinafter, the above-described embodiments are described in detail from a BS operation perspective with reference to FIG. 11. Methods to be described below are merely distinguished for convenience of explanation, and thus it is obvious that partial configuration of any method can be substituted or combined with partial configuration of another method.

FIG. 11 is a flowchart illustrating a method for a base station to transmit downlink control information in a wireless communication system according to another embodiment of the present disclosure.

Referring to FIG. 11, a method for a base station to transmit downlink control information in a wireless communication system according to another embodiment of the present disclosure comprises a step S1110 of transmitting configuration information related to a plurality of TCI states, and a step S1120 of transmitting DCI related to one or more TCI states.

In the step S1110, the base station transmits, to a UE, configuration information related to a plurality of transmission configuration indication (TCI) states. The configuration information may include information (e.g., information related to at least one of target RS/channel combination, TCI state(s) combination, A/N PUCCH, and SRS triggering) based on the proposals 1 to 5.

According to the step S1110, an operation of the base station (100/200 of FIGS. 12 to 16) to transmit the configuration information related to the plurality of TCI states to the UE (100/200 of FIGS. 12 to 16) may be implemented by a device of FIGS. 12 to 16. For example, referring to FIG. 13, one or more processors 202 may control one or more transceivers 206 and/or one or more memories 204 so as to transmit the configuration information related to the plurality of TCI states to the UE 100.

In the step S1120, the base station transmits, to the UE, downlink control information (DCI) related to one or more TCI states of the plurality of TCI states.

A beam update operation may be indicated to the UE based on the DCI. Specifically, the UE may determine a specific TCI state among the one or more TCI states. A beam or a spatial filter commonly used for uplink transmission and/or downlink reception may be determined based on the specific TCI state.

The DCI may include one or more fields related to a pre-configured UE group. The one or more fields may be information based on the proposals 1 to 5.

Information related to one or more targets to which the specific TCI state is applied may be determined based on the one or more fields.

According to an embodiment, the one or more targets may be based on a combination of at least one of i) a physical downlink control channel (PDCCH), ii) a physical downlink shared channel (PDSCH), iii) a downlink reference signal (DL RS), iv) a physical uplink control channel (PUCCH), v) a physical uplink shared channel (PUSCH), or vi) an uplink reference signal (UL RS).

According to an embodiment, whether at least one of a semi-persistent PDSCH or a semi-persistent PUSCH is included in the one or more targets may be determined based on the one or more fields. The present embodiment may be based on the proposal 1-1.

According to an embodiment, the one or more fields may be based on one or more specific blocks, and each of the one or more specific blocks may include information for each UE within the pre-configured UE group. The present embodiment may be based on the proposal 1-1.

The information for each UE within the pre-configured UE group may include at least one of i) information representing the specific TCI state or ii) information representing a combination related to the one or more targets.

The information representing the combination related to the one or more targets may be based on a codepoint of a specific bit field. A specific combination may be mapped to the codepoint.

The specific combination may include one or more signals determined based on at least one of a type of a physical channel, to which the specific TCI state is applied, or a control resource set (CORESET) related to the DCI.

For example, the type of the physical channel may be based on a physical control channel or a physical shared channel. In this case, the specific combination may include {PDCCH, PUCCH} and/or {PDSCH, PUSCH}.

For example, the specific combination may include a physical downlink control channel (PDCCH) related to a specific CORESET within a bandwidth part (BWP) in which the CORESET related to the DCI is configured. In this case, the specific combination may be configured in the form of {PDCCH (CORESET)}.

The specific CORESET may be based on a CORESET configured with the same CORESET pool index as a CORESET pool index of the CORESET related to the DCI among CORESETs within the BWP.

According to an embodiment, the information representing the specific TCI state may be based on a TCI state field to which the one or more TCI states are mapped. The present embodiment may be based on the proposal 1-1.

The one or more TCI states may be based on i) one or more TCI states activated to UE-specific DCI or ii) one or more TCI states configured to one or more CORESETs within a bandwidth part (BWP) in which the CORESET related to the DCI is configured.

According to an embodiment, a location of a specific block related to the UE among the one or more specific blocks within a payload of the DCI may be determined based on pre-configured location information (e.g., starting position related information). The present embodiment may be based on the proposal 1-1.

According to an embodiment, the one or more fields may be based on one TCI state field. The present embodiment may be based on the proposal 1-2. A pre-configured TCI state combination may be mapped to a codepoint of the one TCI state field. The pre-configured TCI state combination may be TCI state(s) based on the proposal 1-1. For example, the pre-configured TCI state combination may be based on i) one or more TCI states activated to UE-specific DCI or ii) one or more TCI states configured to one or more CORESETs within a bandwidth part (BWP) in which the CORESET related to the DCI is configured.

According to an embodiment, one or more specific radio network temporary identifiers (RNTIs) related to the DCI may be configured to the UE. A blind detection for a reception of the DCI may be performed based on one of the one or more specific RNTIs. The present embodiment may be based on the proposal 1.

According to an embodiment, the base station may receive HARQ-ACK information related to the DCI from the UE. That is, the above method may further comprise a step of receiving the HARQ-ACK information related to the DCI.

Information related to a transmission of the HARQ-ACK information (by the UE) may be i) pre-configured via RRC signaling or ii) determined based on the one or more fields. The present embodiment may be based on the proposal 2.

For example, the one or more fields may be based on one or more specific blocks, and each of the one or more specific blocks may include information for each UE within the pre-configured UE group.

Each of the one or more specific blocks may include at least one of i) a HARQ process ID field, ii) a new date indicator (NDI) field, iii) a PUCCH resource indicator (PRI) field, or iv) a field (K2 field) representing an offset for the transmission of the HARQ-ACK information.

According to an embodiment, the DCI may include information related to a triggering of at least one of the one or more targets. The present embodiment may be based on the proposal 3.

According to an embodiment, based on 1) the DCI being DL grant DCI or UL grant DCI, and 2) all bits of a frequency domain resource assignment (FDRA) field within the DCI being configured to a specific value, one or more fields of fields related to a data scheduling of the DCI may be configured to be associated with one or more specific fields. The present embodiment may be based on the proposal 4 and/or the proposal 5.

The one or more specific fields may include at least one of i) a field representing the specific TCI state, ii) a field representing a combination related to the one or more targets, or iii) a field related to a triggering of at least one of the one or more targets.

According to the step S 1120, an operation of the base station (100/200 of FIGS. 12 to 16) to transmit the downlink control information (DCI) related to the one or more TCI states of the plurality of TCI states to the UE (100/200 of FIGS. 12 to 16) may be implemented by the device of FIGS. 12 to 16. For example, referring to FIG. 13, one or more processors 202 may control one or more transceivers 206 and/or one or more memories 204 so as to transmit the DCI related to the one or more TCI states of the plurality of TCI states to the UE 100.

## Example of communication system applied to present disclosure

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

FIG. 12 illustrates a communication system 1 applied to the present disclosure.

Referring to FIG. 12, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Example of wireless device applied to the present disclosure

FIG. 13 illustrates wireless devices applicable to the present disclosure.

Referring to FIG. 13, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 12.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Example of signal processing circuit applied to the present disclosure**

FIG. 14 illustrates a signal process circuit for a transmission signal.

Referring to FIG. 14, a signal processing circuit 1000 may include scramblers 1010, modulators 1020, a layer mapper 1030, a precoder 1040, resource mappers 1050, and signal generators 1060. An operation/function of FIG. 14 may be performed, without being limited to, the processors 102 and 202 and/or the transceivers 106 and 206 of FIG. 13. Hardware elements of FIG. 14 may be implemented by the processors 102 and 202 and/or the transceivers 106 and 206 of FIG. 13. For example, blocks 1010 to 1060 may be implemented by the processors 102 and 202 of FIG. 13. Alternatively, the blocks 1010 to 1050 may be implemented by the processors 102 and 202 of FIG. 13 and the block 1060 may be implemented by the transceivers 106 and 206 of FIG. 13.

Codewords may be converted into radio signals via the signal processing circuit 1000 of FIG. 14. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 14. For example, the wireless devices (e.g., 100 and 200 of FIG. 13) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

**Example of application of wireless device applied to the present disclosure**

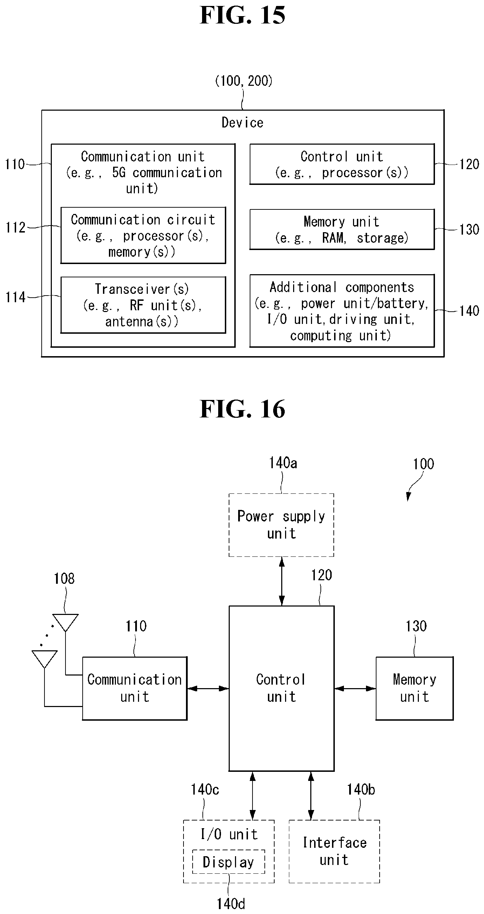

FIG. 15 illustrates another example of a wireless device applied to the present disclosure.

The wireless device may be implemented in various forms according to a use-case/service (refer to FIG. 12). Referring to FIG. 15, wireless devices 100 and 200 may correspond to the wireless devices 100 and 200 of FIG. 13 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 13. For example, the transceiver(s) 114 may include the one or more transceivers 106 and 206 and/or the one or more antennas 108 and 208 of FIG. 13. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 12), the vehicles (100b-1 and 100b-2 of FIG. 12), the XR device (100c of FIG. 12), the hand-held device (100d of FIG. 12), the home appliance (100e of FIG. 12), the IoT device (100f of FIG. 12), a digital broadcast terminal, a hologram device, a public safety device, an MTC device, a medicine device, a fintech device (or a finance device), a security device, a climate/environment device, the AI server/device (400 of FIG. 12), the BSs (200 of FIG. 12), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

**Example of hand-held device applied to the present disclosure**

FIG. 16 illustrates a hand-held device applied to the present disclosure.

The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 16, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to 140c correspond to the blocks 110 to 130/140 of FIG. 15, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

The embodiments of the present disclosure described hereinbelow are combinations of elements and features of the present disclosure. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions of any one embodiment may be included in another embodiment and may be replaced with corresponding constructions of another embodiment.

It is obvious to those skilled in the art that claims that are not explicitly cited in each other in the appended claims may be presented in combination as an embodiment of the present disclosure or included as a new claim by subsequent amendment after the application is filed.

The embodiments of the present disclosure may be achieved by various means, for example, hardware, firmware, software, or a combination thereof. In a hardware configuration, the methods according to the embodiments of the present disclosure may be achieved by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), processors, controllers, microcontrollers, microprocessors, etc.

In a firmware or software configuration, the embodiments of the present disclosure may be implemented in the form of a module, a procedure, a function, etc. For example, software code may be stored in a memory unit and executed by a processor. The memories may be located at the interior or exterior of the processors and may transmit data to and receive data from the processors via various known means.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

## Claims

1. A method of a user equipment (UE) for receiving downlink control information (DCI) in a wireless communication system, the method comprising:

   receiving configuration information related to a plurality of transmission configuration indication (TCI) states;
   receiving downlink control information (DCI) related to one or more TCI states of the plurality of TCI states; and
   determining a specific TCI state among the one or more TCI states based on the DCI,
   wherein the DCI includes one or more fields related to a pre-configured UE group, and
   wherein, based on the one or more fields, information related to one or more targets to which the specific TCI state is applied is determined.

2. The method of claim 1, wherein the one or more targets are based on a combination of at least one of i) a physical downlink control channel (PDCCH), ii) a physical downlink shared channel (PDSCH), iii) a downlink reference signal (DL RS), iv) a physical uplink control channel (PUCCH), v) a physical uplink shared channel (PUSCH), or vi) an uplink reference signal (UL RS).

3. The method of claim 2, wherein, based on the one or more fields, whether at least one of a semi-persistent PDSCH or a semi-persistent PUSCH is included in the one or more targets is determined.

4. The method of claim 1, wherein the one or more fields are based on one or more specific blocks, and
   wherein each of the one or more specific blocks includes information for each UE within the pre-configured UE group.

5. The method of claim 4, wherein the information for each UE within the pre-configured UE group includes at least one of i) information representing the specific TCI state or ii) information representing a combination related to the one or more targets.

6. The method of claim 5, wherein the information representing the combination related to the one or more targets is based on a codepoint of a specific bit field, and
   wherein a specific combination is mapped to the codepoint.

7. The method of claim 6, wherein the specific combination includes one or more signals determined based on at least one of a type of a physical channel, to which the specific TCI state is applied, or a control resource set (CORESET) related to the DCI.

8. The method of claim 7, wherein the type of the physical channel is based on a physical control channel or a physical shared channel.

9. The method of claim 7, wherein the specific combination includes a physical downlink control channel (PDCCH) related to a specific CORESET within a bandwidth part (BWP) in which the CORESET related to the DCI is configured.

10. The method of claim 9, wherein the specific CORESET is based on a CORESET configured with the same CORESET pool index as a CORESET pool index of the CORESET related to the DCI among CORESETs within the BWP.

11. The method of claim 5, wherein the information representing the specific TCI state is based on a TCI state field to which the one or more TCI states are mapped.

12. The method of claim 11, wherein the one or more TCI states are based on i) one or more TCI states activated to UE-specific DCI or ii) one or more TCI states configured to one or more CORESETs within a bandwidth part (BWP) in which a control resource set (CORESET) related to the DCI is configured.

13. The method of claim 4, wherein a location of a specific block related to the UE among the one or more specific blocks within a payload of the DCI is determined based on pre-configured location information.

14. The method of claim 1, wherein the one or more fields are based on one TCI state field, and
wherein a pre-configured TCI state combination is mapped to a codepoint of the one TCI state field.

15. The method of claim 1, wherein one or more specific radio network temporary identifiers (RNTIs) related to the DCI are configured, and
wherein a blind detection for a reception of the DCI is performed based on one of the one or more specific RNTIs.

16. The method of claim 1, further comprising:

transmitting HARQ-ACK information related to the DCI,
wherein information related to a transmission of the HARQ-ACK information is i) pre-configured via an RRC signaling or ii) determined based on the one or more fields.

17. The method of claim 16, wherein the one or more fields are based on one or more specific blocks, and each of the one or more specific blocks includes information for each UE within the pre-configured UE group, and
wherein each of the one or more specific blocks includes at least one of i) a HARQ process ID field, ii) a new date indicator (NDI) field, iii) a PUCCH resource indicator (PRI) field, or iv) a field (K2 field) representing an offset for the transmission of the HARQ-ACK information.

18. The method of claim 1, wherein the DCI includes information related to a triggering of at least one of the one or more targets.

19. The method of claim 1, wherein, based on 1) the DCI being DL grant DCI or UL grant DCI, and 2) all bits of a frequency domain resource assignment (FDRA) field within the DCI being configured to a specific value, one or more fields of fields related to a data scheduling of the DCI are configured to be associated with one or more specific fields.

20. The method of claim 19, wherein the one or more specific fields include at least one of i) a field representing the specific TCI state, ii) a field representing a combination related to the one or more targets, or iii) a field related to a triggering of at least one of the one or more targets.

21. A user equipment (UE) receiving downlink control information (DCI) in a wireless communication system, the UE comprising:

one or more transceivers;
one or more processors; and
one or more memories operably connectable to the one or more processors,
wherein the one or more memories are configured to store instructions that allow the one or more processors to perform operations based on being executed by the one or more processors,
wherein the operations comprise:

receiving configuration information related to a plurality of transmission configuration indication (TCI) states;

receiving downlink control information (DCI) related to one or more TCI states of the plurality of TCI states; and

determining a specific TCI state among the one or more TCI states based on the DCI,

wherein the DCI includes one or more fields related to a pre-configured UE group, and

wherein, based on the one or more fields, information related to one or more targets to which the specific TCI state is applied is determined.

22. A method of a base station for transmitting downlink control information (DCI) in a wireless communication system, the method comprising:

transmitting configuration information related to a plurality of transmission configuration indication (TCI) states; and

transmitting downlink control information (DCI) related to one or more TCI states of the plurality of TCI states,

wherein, based on the DCI, a specific TCI state among the one or more TCI states is determined,

wherein the DCI includes one or more fields related to a pre-configured user equipment (UE) group, and

wherein, based on the one or more fields, information related to one or more targets to which the specific TCI state is applied is determined.

23. A base station transmitting downlink control information (DCI) in a wireless communication system, the base station comprising:

one or more transceivers;

one or more processors; and

one or more memories operably connectable to the one or more processors,

wherein the one or more memories are configured to store instructions that allow the one or more processors to perform operations based on being executed by the one or more processors,

wherein the operations comprise:

transmitting configuration information related to a plurality of transmission configuration indication (TCI) states; and

transmitting downlink control information (DCI) related to one or more TCI states of the plurality of TCI states,

wherein, based on the DCI, a specific TCI state among the one or more TCI states is determined,

wherein the DCI includes one or more fields related to a pre-configured user equipment (UE) group, and

wherein, based on the one or more fields, information related to one or more targets to which the specific TCI state is applied is determined.

24. A device comprising:

one or more memories; and

one or more processors functionally connected to the one or more memories,

wherein the one or more memories are configured to store instructions that allow the one or more processors to perform operations based on being executed by the one or more processors,

wherein the operations comprise:

receiving configuration information related to a plurality of transmission configuration indication (TCI) states;

receiving downlink control information (DCI) related to one or more TCI states of the plurality of TCI states; and

determining a specific TCI state among the one or more TCI states based on the DCI,

wherein the DCI includes one or more fields related to a pre-configured user equipment (UE) group, and

wherein, based on the one or more fields, information related to one or more targets to which the specific TCI state is applied is determined.

25. One or more non-transitory computer readable mediums storing one or more instructions,

wherein the one or more instructions are configured to allow one or more processors to perform operations based on being executed by the one or more processors,

wherein the operations comprise:

receiving configuration information related to a plurality of transmission configuration indication (TCI) states;
receiving downlink control information (DCI) related to one or more TCI states of the plurality of TCI states; and
determining a specific TCI state among the one or more TCI states based on the DCI,
wherein the DCI includes one or more fields related to a pre-configured user equipment (UE) group, and
wherein, based on the one or more fields, information related to one or more targets to which the specific TCI state is applied is determined.

# FIG. 1

# FIG. 2

# FIG. 3

Radio Frame 10ms

Fixed Size

Subframe 1ms

| 0 | 1 | 2 | 3 | 4 | 5 | 6 | 7 | 8 | 9 |

Subframe ={1, 2, 4} Slots

Slot

| 0 | 1 | 2 | 3 |

Slot={7, 14} Symbols

Size depends on subcarrier spacing

Symbol

| 0 | 1 | 2 | 3 | 4 | 5 | 6 | 7 | 8 | 9 | 10 | 11 | 12 | 13 |

Mini-Slot
(URLLC)

Mini-Slot={2, 4, 7} Symbols − ffs

# FIG. 4

One subframe

$14 \cdot 2^{\mu}$ OFDM symbols

$k = N_{RB}^{\mu} N_{SC}^{RB} - 1$

$N_{RB}^{\mu} N_{SC}^{RB} - 1$ Subcarriers

$N_{SC}^{RB}$ Subcarriers

Resource Block

Resource Element
-$(k, \bar{l})$ in resource grid
-$(k, l)$ in resource block

$k = 0$

$l = 0$

$l = 14 \cdot 2^{\mu} - 1$

# FIG. 5

Antenna port A
Antenna port B } Numerology X

Antenna port A
Antenna port B } Numerology Y

# FIG. 6

INITIAL CELL SEARCH | SYSTEM INFORMATION RECEPTION | RANDOM ACCESS PROCEDURE | GENERAL DL/UL Tx/Rx

PSS/SSS& [DLRS]& PBCH | PDCCH/ PDSCH (BCCH) | PRACH | PDCCH/ PDSCH | PUSCH | PDCCH/ PDSCH | PDCCH/ PDSCH | PUSCH/ PUCCH

S601 | S602 | S603 | S604 | S605 | S606 | S607 | S608

· DL/UL ACK/NACK
· UE CQI/PMI RI REPORT USING PUSCH AND PUCCH

# FIG. 7

# FIG. 8

(a)                                                    (b)

# FIG. 9

UE                                                                    BS

SRS Config. IE                                              S910
(usage=BM, SRS-SpatialRelation Info)

S920

┌─────────────────┐
│ Determine Tx beam │
│ for SRS resource  │
└─────────────────┘

                                                              S930
Transmit SRS through determined Tx beam

                                                              S940
feedback

# FIG. 10

```
              ┌─────────┐
              │  Start  │
              └─────────┘
                   │
                   ▼
┌─────────────────────────────────────────┐
│  Receive configuration information related to │──S1010
│        a plurality of TCI states         │
└─────────────────────────────────────────┘
                   │
                   ▼
┌─────────────────────────────────────────┐
│  Receive DCI related to one or more TCI states │──S1020
└─────────────────────────────────────────┘
                   │
                   ▼
┌─────────────────────────────────────────┐
│  Determine specific TCI state based on DCI │──S1030
└─────────────────────────────────────────┘
                   │
                   ▼
              ┌─────────┐
              │   End   │
              └─────────┘
```

# FIG. 11

```
              ┌─────────┐
              │  Start  │
              └─────────┘
                   │
                   ▼
┌─────────────────────────────────────────┐
│  Transmit configuration information related to │──S1110
│        a plurality of TCI states         │
└─────────────────────────────────────────┘
                   │
                   ▼
┌─────────────────────────────────────────┐
│  Transmit DCI related to one or more TCI states │──S1120
└─────────────────────────────────────────┘
                   │
                   ▼
              ┌─────────┐
              │   End   │
              └─────────┘
```

EP 4 262 102 A1

# FIG. 12

52

# FIG. 13

# FIG. 14

# FIG. 15

(100, 200)

| | |
|---|---|
| Device | |
| Communication unit (e.g., 5G communication unit) | Control unit (e.g., processor(s)) |
| Communication circuit (e.g., processor(s), memory(s)) | Memory unit (e.g., RAM, storage) |
| Transceiver(s) (e.g., RF unit(s), antenna(s)) | Additional components (e.g., power unit/battery, I/O unit, driving unit, computing unit) |

110 — Communication unit (e.g., 5G communication unit)
112 — Communication circuit (e.g., processor(s), memory(s))
114 — Transceiver(s) (e.g., RF unit(s), antenna(s))
120 — Control unit (e.g., processor(s))
130 — Memory unit (e.g., RAM, storage)
140 — Additional components (e.g., power unit/battery, I/O unit, driving unit, computing unit)

# FIG. 16

140a

Power supply unit

100

108

110 — Communication unit

120 — Control unit

130 — Memory unit

140c — I/O unit
Display — 140d

140b — Interface unit

## INTERNATIONAL SEARCH REPORT

International application No.

**PCT/KR2022/000463**

**A.    CLASSIFICATION OF SUBJECT MATTER**

**H04B 7/06**(2006.01)i; **H04B 7/08**(2006.01)i; **H04W 72/12**(2009.01)i; **H04L 5/00**(2006.01)i; **H04W 72/04**(2009.01)i

According to International Patent Classification (IPC) or to both national classification and IPC

**B.     FIELDS SEARCHED**

Minimum documentation searched (classification system followed by classification symbols)

H04B 7/06(2006.01); H04B 7/0408(2017.01); H04L 5/00(2006.01); H04W 28/06(2009.01); H04W 72/04(2009.01); H04W 72/12(2009.01); H04W 88/10(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 단말 그룹(terminal group), 그룹 공통 DCI(group common downlink control information), 전송 설정 지시 상태(transmission configuration indication state), 타겟(target)

**C.     DOCUMENTS CONSIDERED TO BE RELEVANT**

| Category* | Citation of document, with indication, where appropriate, of the relevant passages | Relevant to claim No. |
|---|---|---|
| X | KR 10-2021-0002035 A (SAMSUNG ELECTRONICS CO., LTD.) 07 January 2021 (2021-01-07)<br>See paragraphs [0120], [0139]-[0143], [0154]-[0155], [0191], [0202], [0215], [0226] and [0234]-[0254]; and tables 1-2. | 1-2,14,19-25 |
| Y |  | 3-13,15-18 |
| Y | WO 2020-220310 A1 (ZTE CORPORATION) 05 November 2020 (2020-11-05)<br>See pages 9, 13, 15 and 24-25; and claims 22-23. | 3-13,15-18 |
| Y | US 2020-0351841 A1 (CIRIK, Ali Cagatay et al.) 05 November 2020 (2020-11-05)<br>See paragraph [0511]; and figure 29. | 9-10,12 |
| A | US 2019-0254120 A1 (APPLE INC.) 15 August 2019 (2019-08-15)<br>See paragraphs [0126]-[0141]; and figures 7-13. | 1-25 |
| A | WO 2019-205997 A1 (SONY CORPORATION et al.) 31 October 2019 (2019-10-31)<br>See page 5, line 5 - page 10, line 22. | 1-25 |

☐ Further documents are listed in the continuation of Box C.        ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **28 April 2022** | **02 May 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

| International application No. |
| --- |
| **PCT/KR2022/000463** |

| Patent document cited in search report | | | Publication date (day/month/year) | Patent family member(s) | | | Publication date (day/month/year) |
| --- | --- | --- | --- | --- | --- | --- | --- |
| KR | 10-2021-0002035 | A | 07 January 2021 | US | 2020-0413390 | A1 | 31 December 2020 |
| | | | | WO | 2020-263037 | A1 | 30 December 2020 |
| WO | 2020-220310 | A1 | 05 November 2020 | CA | 3138219 | A1 | 05 November 2020 |
| | | | | CN | 113767681 | A | 07 December 2021 |
| | | | | KR | 10-2022-0002542 | A | 06 January 2022 |
| US | 2020-0351841 | A1 | 05 November 2020 | | None | | |
| US | 2019-0254120 | A1 | 15 August 2019 | CN | 111713042 | A | 25 September 2020 |
| | | | | EP | 3753135 | A1 | 23 December 2020 |
| | | | | JP | 2021-514578 | A | 10 June 2021 |
| | | | | KR | 10-2020-0108332 | A | 17 September 2020 |
| | | | | WO | 2019-160947 | A1 | 22 August 2019 |
| WO | 2019-205997 | A1 | 31 October 2019 | CN | 110392438 | A | 29 October 2019 |
| | | | | CN | 111656845 | A | 11 September 2020 |
| | | | | EP | 3768026 | A1 | 20 January 2021 |
| | | | | US | 2021-0083914 | A1 | 18 March 2021 |

Form PCT/ISA/210 (patent family annex) (July 2019)